# EUROPEAN PATENT APPLICATION

(11) **EP 4 797 164 A1**
(43) Date of publication of application: **26.08.2026**
(21) Application number: 24890407.0
(22) Date of filing: 15.10.2024
(51) Int. Cl.: G06N 5/04

(54) **DATA PROCESSING METHOD AND APPARATUS THEREOF**

(30) Priority: 15.11.2023 CN 202311524978
(71) Applicant: HUAWEI TECHNOLOGIES CO., LTD., Shenzhen 518129 (CN)
(72) Inventor: HU, Ting, Shenzhen, Guangdong 518129 (CN); HU, Jiaxin, Shenzhen, Guangdong 518129 (CN); BAI, Haoli, Shenzhen, Guangdong 518129 (CN); GAO, Han, Shenzhen, Guangdong 518129 (CN); QIAN, Cheng, Shenzhen, Guangdong 518129 (CN); LIU, Ruikang, Shenzhen, Guangdong 518129 (CN); YU, Xianzhi, Shenzhen, Guangdong 518129 (CN); HOU, Lu, Shenzhen, Guangdong 518129 (CN); YAO, Jun, Shenzhen, Guangdong 518129 (CN); LIU, Qun, Shenzhen, Guangdong 518129 (CN); ZENG, Jia, Shenzhen, Guangdong 518129 (CN)
(74) Representative: Thun, Clemens
(86) International application number: PCT/CN2024/124965
(87) International publication number: WO 2025/103049

(57) **Abstract**

A data processing method is applied to the field of artificial intelligence. The method includes: generating second data based on first data through a first network; generating third data based on the first data through a second network, where the first network includes a first network layer, the second network includes a second network layer, and the first network layer is a partial network of the second network layer; and verifying the second data based on the third data. In this application, a network (the second network) for performing a data verification process reuses a network (a part of the network, namely, the first network) for generating data, so that additional inference deployment overheads can be reduced. In addition, when the second network performs verification, an inference result of the first network can be reused in a memory without additional latency, and computing overheads are reduced.

## Description

This application claims priority to Chinese Patent Application No. 202311524978.3, filed with the China National Intellectual Property Administration on November 15, 2023 and entitled "DATA PROCESSING METHOD AND APPARATUS", which is incorporated herein by reference in its entirety.

### TECHNICAL FIELD

This application relates to the field of artificial intelligence, and in particular, to a data processing method and apparatus.

### BACKGROUND

Large language model inference is mainly divided into two stages. One is a full (prefill) inference stage, where all words entered by a user are integrally input to a network for computing, to obtain a final output with one word. In this stage, a plurality of words can be inferred in parallel, to effectively use computing and memory bandwidths of hardware. The other is an incremental (decoding) inference stage, where the full inference output is used as an input of a current step, and is input to a network for computing, and then an output of a current word is used as an input of a next step until decoding is completed. This stage is an autoregressive process, and decoding needs to be performed word by word. A parallelism degree is low, and hardware utilization is low. Repeated memory access for weights wastes the memory bandwidth, and a computing unit cannot be fully used. However, if a large model can decode a plurality of words in parallel in a single step, a latency is almost not increased compared with that of decoding a single word. In this way, hardware utilization can be improved.

To improve a parallelism degree of an incremental stage of the large model, an idea of predicted execution, namely, speculative sampling, is applied to large model inference. This manner can ensure completely the same sampling distribution as that in a manner of using an original model. Two models are used in this manner. One is the original target model, and the other is an approximation model that is much smaller than the original model. The approximation model is used for serial autoregressive decoding, and the large model is used for result verification. The large model can verify a plurality of tokens in parallel at a time. Therefore, a quantity of autoregressive times of the large model can be greatly reduced, and an arithmetic intensity of the large model inference can be improved, thereby improving inference performance of the large model.

Speculative inference can accelerate the large model inference without a loss. However, additional training and deployment of a small speculative model are required. The small model also requires maintenance and deployment costs. When a degree of matching between the large model and the small model is low, the speculative inference may even cause performance rollback and an inference cost increase. Therefore, how to reduce the deployment costs of the small model and ensure a high acceleration ratio of the large model inference is an important issue of the speculative inference.

### SUMMARY

According to a first aspect, this application provides a data processing method. The method includes: generating second data based on first data through a first network; generating third data based on the first data through a second network, where the first network includes a first network layer, the second network includes a second network layer, and the first network layer is a partial network of the second network layer; and verifying the second data based on the third data.

In this application, a network (the second network) for performing a data verification process reuses a network (a part of the network, namely, the first network) for generating data, so that additional inference deployment overheads can be reduced. In addition, when the second network performs verification, an inference result of the first network can be reused in a memory without additional latency, and computing overheads are reduced.

This embodiment of this application may be applied to speculative inference, specifically, may be applied to an incremental inference process of the speculative inference. In the incremental inference process, a model (the first network) needs to perform autoregressive inference, and the model needs to verify a result obtained through autoregressive inference. The autoregressive inference may be the foregoing step of "obtaining second data based on first data through a first network". Verifying the result obtained through autoregressive inference may be the foregoing steps of "generating third data based on the first data through a second network, where the first network includes a first network layer, the second network includes a second network layer, and the first network layer is a partial network of the second network layer; and verifying the second data based on the third data". During incremental inference, verification may be performed a plurality of times. Finally, successfully verified data may be used as an output.

The first data may be a generated token, namely, a data unit, for example, may be a text unit (for example, a character unit, a word unit, or a punctuation mark), or may be an image unit (for example, an image block), or an audio unit. The second data may be used as an adjacent data unit following the first data in an autoregressive inference result.

In a possible implementation, before generating the second data based on the first data through the first network, the method further includes: generating the first data based on fourth data through the first network.

In a possible implementation, the method further includes: generating fifth data based on the fourth data through the second network, where the action of generating the fifth data and the action of generating the third data are executed in parallel; and verifying the first data based on the fifth data.

In a possible implementation, the method is applied to the incremental inference process, both the first network layer and the second network layer belong to a target neural network, and the target neural network is a model used in a full inference process corresponding to the incremental inference process.

The full inference process is an inference process before the incremental inference process. During the speculative inference, full inference is first performed on input data through a large model, and then incremental inference is performed by using a full inference result. It may be considered that a correspondence exists between the full inference and the incremental inference that have a dependency relationship.

The full inference (namely, context inference, which may also be referred to as prefill inference) means that all input data is input into a network (for example, the target neural network in this embodiment of this application) for computing, and one of data units is obtained as a full inference output.

The incremental (Decoding) inference means that the full inference output is used as an input of a current step, and is input to a network (for example, the first network, the second network, and the third network in this embodiment of this application) for computing. A data unit output in each step may be used as an input of a next step, and a cycle is performed until an output data unit is a specified termination data unit, or a quantity of decoding steps reaches a specified maximum value.

On one hand, in this embodiment of this application, a network (the second network) for performing an incremental verification process in the speculative inference process reuses a network (a part of the network, namely, the first network) for performing autoregressive inference, so that additional inference deployment overheads can be reduced. In addition, when the second network performs incremental verification, an inference result of the first network can be reused in a memory without additional latency, and computing overheads are reduced. On the other hand, both the first network layer in the first network and the second network layer in the second network may be large models for full inference. Therefore, there is no need to additionally maintain and train a separate small model, thereby reducing costs.

In a possible implementation, the second network layer includes the first network layer and a third network layer connected to the first network layer, and the third network layer is closer to an output layer of the target neural network than the first network layer.

In a possible implementation, the first network includes the first network layer and a first decoding layer, and the second network includes the second network layer and a second decoding layer. Generating the second data based on the first data through the first network includes: obtaining a first processing result based on the first data through the first network layer, and obtaining the second data based on the first processing result through the first decoding layer. Generating the third data based on the first data through the second network includes: obtaining a second processing result based on the first processing result through the third network layer, and generating the third data based on the second processing result through the second decoding layer.

Because an inference branch of the large model is reused, an inference result of a sub-model can be directly reused without an additional latency. The large model inference can cover overheads of the small model.

In a possible implementation, verifying the second data based on the third data includes: when the third data is consistent with the second data, determining that verification on the second data succeeds; and when the third data is inconsistent with the second data, determining that verification on the second data fails.

In a possible implementation, the method further includes: generating sixth data based on the first data through a third network when it is determined that verification on the second data succeeds, where the third network includes a fourth network layer, and the second network layer is a partial network of the fourth network layer; and verifying the second data based on the sixth data.

In a possible implementation, the method further includes: generating the sixth data based on the first data through the third network when it is determined that verification on the second data fails, where the third network includes the fourth network layer, and the second network layer is a partial network of the fourth network layer; and verifying the third data based on the sixth data.

In a possible implementation, the method further includes: generating seventh data based on the third data through the second network when it is determined that verification on the second data fails.

In a possible implementation, the method is applied to the incremental inference process, and generating the seventh data based on the third data through the second network when it is determined, based on the fourth data, that verification on the second data fails includes: when a historical verification success rate in the incremental inference process meets a preset condition (for example, is greater than a threshold) and it is determined that verification on the second data fails, generating the seventh data based on the third data through the second network.

In a possible implementation, the method further includes: generating eighth data based on the third data through the first network when it is determined that verification on the second data fails; generating the seventh data based on the third data through the second network; and verifying the eighth data based on the seventh data.

In a possible implementation, generating the eighth data based on the third data through the first network when it is determined that verification on the second data fails includes: when the historical verification success rate in the incremental inference process does not meet the preset condition (for example, is less than the threshold) and it is determined that verification on the second data fails, generating the eighth data based on the third data through the first network.

Generation of the seventh data performed by the second network through autoregressive inference may be referred to as a solution 1, and generation of the seventh data performed by the first network through autoregressive inference may be referred to as a solution 2. An advantage of the solution 1 is that an amount of generated data can be controlled, but the solution is not applied to speculative acceleration, and an excessively large quantity of autoregressive times slow down an overall speed. An advantage of the solution 2 is that autoregressive generation in a plurality of times can be accelerated, but rollback is caused when a matching degree is not good. During actual application, the two solutions may be used in combination based on a matching degree.

In a possible implementation, the method is applied to the incremental inference process, and the incremental inference process is a reply generation process for the input data. Generating the second data based on the first data through the first network includes: determining, based on attention information in the full inference process corresponding to the incremental inference process and a length of generated data in the reply generation process, attention sub-information corresponding to the length of the generated data; and generating the second data based on the attention sub-information and the first data through the first network.

The attention information may be an attention mask. In this embodiment of this application, a decoded_length parameter for a decoded sequence length of each batch is newly added during the incremental inference, and an attention_mask in each batch during each time of inference is dynamically updated based on the decoded_length and a verification length n, to ensure correctness of attention computing. A diagram of the attention_mask is shown below. If n in each batch has a different length, attention computing logic needs to be correspondingly modified for adaptation. In this solution, original multi-batch full inference logic may be reused, and there is no redundant computing and no additional memory overhead. Compared with that of single-batch inference, a throughput can be greatly improved.

In a possible implementation, the method is performed on a first node, and the full inference process corresponding to the incremental inference process is performed on a second node. Before generating the second data based on the first data through the first network, the method further includes: receiving a processing result that is sent by the second node and that is obtained by performing the full inference process, where the processing result is used to perform the incremental inference process.

In a possible implementation, the first data is data generated in an incremental inference process for a first batch, the method is applied to the first node, the first node further performs an incremental inference process for a second batch in parallel when performing the method, and the method further includes: when the incremental inference process for the first batch is completed, and the first node has not completed the incremental inference process for the second batch, clearing data in memory space corresponding to the incremental inference process for the first batch, and starting to perform an incremental inference process for a third batch.

In a possible implementation, the method further includes: when it is determined that verification on the second data fails, and an amount of data on which verification performed by the second network succeeds in a current verification period is less than a preset value, generating data in an autoregressive manner through the second network, until an amount of data on which verification performed by the second network succeeds in a current verification period for the first batch reaches the preset value; or when it is determined that verification on the second data fails, generating data in an autoregressive manner through the first network, and verifying, through the second network, the data generated by the first network in the autoregressive manner, until the amount of data on which verification performed by the second network succeeds in the current verification period reaches the preset value.

When stage=1 is combined with a dynamic batch, an overall throughput can be further improved. Because a data matching degree in each batch is different, and a quantity of decoding steps is also different, if a sentence on which decoding is completed is exited in advance, hardware utilization can be improved. In addition, it needs to be ensured that a valid token is replaced during each time of dynamic batch scheduling, a KV cache at a corresponding location is cleared, and corresponding decode_len is updated. If stage>1, a multi-level cache further needs to be set to ensure a matching degree of multi-stage speculative inference. During dynamic batch scheduling, all caches at corresponding batch locations need to be cleared.

In a possible implementation, the first data is a token, the second data is an adjacent token following the first data, and the third data is an adjacent token following the second data.

In a possible implementation, the first data, the second data, and the third data are text data units, image data units, or audio data units.

In a possible implementation, the first data is a data unit obtained in the full inference process or a data unit generated by performing, through the first network, autoregressive inference on the data unit obtained in the full inference process.

In addition, this application further provides a data processing method. The method includes:
obtaining input data;
performing full inference based on the input data through a target neural network, to obtain a full inference result; and
obtaining, based on the full inference result through incremental inference, a reply result corresponding to the input data, where the incremental inference is implemented through a first network and a second network, the first network is used for autoregressive inference, the second network is used for verification inference, the first network includes a first network layer, the second network includes a second network layer, and the first network layer is a partial network of the second network layer.

According to a second aspect, this application provides a data processing apparatus. The apparatus includes:
a processing module, configured to: generate second data based on first data through a first network; generate third data based on the first data through a second network, where the first network includes a first network layer, the second network includes a second network layer, and the first network layer is a partial network of the second network layer; and verify the second data based on the third data.

In a possible implementation, before generating the second data based on the first data through the first network, the processing module is further configured to:
generate the first data based on fourth data through the first network.

In a possible implementation, the processing module is further configured to:
generate fifth data based on the fourth data through the second network, where the action of generating the fifth data and the action of generating the third data are executed in parallel; and
verify the first data based on the fifth data.

In a possible implementation, the apparatus is used in an incremental inference process, both the first network layer and the second network layer belong to a target neural network, and the target neural network is a model used in a full inference process corresponding to the incremental inference process.

In a possible implementation, the second network layer includes the first network layer and a third network layer connected to the first network layer, and the third network layer is closer to an output layer of the target neural network than the first network layer.

In a possible implementation, the first network includes the first network layer and a first decoding layer, and the second network includes a second network layer and a second decoding layer.

The processing module is specifically configured to:
obtain a first processing result based on the first data through the first network layer, and obtain the second data based on the first processing result through the first decoding layer; and
obtain a second processing result based on the first processing result through the third network layer, and generate the third data based on the second processing result through the second decoding layer.

In a possible implementation, the processing module is specifically configured to:
when the third data is consistent with the second data, determine that verification on the second data succeeds; and
when the third data is inconsistent with the second data, determine that verification on the second data fails.

In a possible implementation, the processing module is further configured to:
generate sixth data based on the first data through a third network when it is determined that verification on the second data succeeds, where the third network includes a fourth network layer, and the second network layer is a partial network of the fourth network layer; and
verify the second data based on the sixth data.

In a possible implementation, the processing module is further configured to:
generate the sixth data based on the first data through the third network when it is determined that verification on the second data fails, where the third network includes the fourth network layer, and the second network layer is a partial network of the fourth network layer; and
verify the third data based on the sixth data.

In a possible implementation, the processing module is further configured to:
generate seventh data based on the third data through the second network when it is determined that verification on the second data fails.

In a possible implementation, the apparatus is used in the incremental inference process, and the processing module is specifically configured to:
when a historical verification success rate in the incremental inference process meets a preset condition and it is determined that verification on the second data fails, generate the seventh data based on the third data through the second network.

In a possible implementation, the processing module is further configured to:
generate eighth data based on the third data through the first network when it is determined that verification on the second data fails;
generate the seventh data based on the third data through the second network; and
verify the eighth data based on the seventh data.

In a possible implementation, the processing module is specifically configured to:
when the historical verification success rate in the incremental inference process does not meet the preset condition and it is determined that verification on the second data fails, generate the eighth data based on the third data through the first network.

In a possible implementation, the apparatus is used in the incremental inference process, the incremental inference process is a reply generation process for input data, and the processing module is specifically configured to:
determine, based on attention information in the full inference process corresponding to the incremental inference process and a length of generated data in the reply generation process, attention sub-information corresponding to the length of the generated data; and
generate the second data based on the attention sub-information and the first data through the first network.

In a possible implementation, the apparatus is used in a first node for execution, and the full inference process corresponding to the incremental inference process is performed on a second node.

Before generating the second data based on the first data through the first network, the processing module is further configured to:
receive a processing result that is sent by the second node and that is obtained by performing the full inference process, where the processing result is used to perform the incremental inference process.

In a possible implementation, the first data is data generated in an incremental inference process for a first batch, the apparatus is used in the first node, the first node further performs an incremental inference process for a second batch in parallel when the apparatus is used for execution, and the processing module is further configured to:
when the incremental inference process for the first batch is completed, and the first node has not completed the incremental inference process for the second batch, clear data in memory space corresponding to the incremental inference process for the first batch, and start to perform an incremental inference process for a third batch.

In a possible implementation, the processing module is further configured to: when it is determined that verification on the second data fails, and an amount of data on which verification performed by the second network succeeds in a current verification period is less than a preset value, generate data in an autoregressive manner through the second network, until an amount of data on which verification performed by the second network succeeds in a current verification period for the first batch reaches the preset value; or
when it is determined that verification on the second data fails, generate data in an autoregressive manner through the first network, and verify, through the second network, the data generated by the first network in the autoregressive manner, until the amount of data on which verification performed by the second network succeeds in the current verification period reaches the preset value.

In a possible implementation, the first data is a token, the second data is an adjacent token following the first data, and the third data is an adjacent token following the second data.

In a possible implementation, the first data, the second data, and the third data are text data units, image data units, or audio data units.

In a possible implementation, the first data is a data unit obtained in the full inference process or a data unit generated by performing, through the first network, autoregressive inference on the data unit obtained in the full inference process.

According to a third aspect, an embodiment of this application provides a data processing apparatus. The apparatus may include a memory, a processor, and a bus system. The memory is configured to store a program. The processor is configured to execute the program in the memory, to perform the method according to the first aspect and any optional implementation of the first aspect.

According to a fourth aspect, an embodiment of this application provides a computer-readable storage medium. The computer-readable storage medium stores a computer program, and when the computer program is run on a computer, the computer is enabled to perform the method according to the first aspect and any optional implementation of the first aspect.

According to a fifth aspect, an embodiment of this application provides a computer program. When the computer program is run on a computer, the computer is enabled to perform the method according to the first aspect and any optional implementation of the first aspect.

According to a sixth aspect, this application provides a chip system. The chip system includes a processor, configured to support an execution device or a training device in implementing functions in the foregoing aspects, for example, sending or processing data or information in the foregoing methods. In a possible design, the chip system further includes a memory. The memory is configured to store program instructions and data that are necessary for the execution device or the training device. The chip system may include a chip, or may include a chip and another discrete device.

### BRIEF DESCRIPTION OF DRAWINGS

FIG. 1A is a diagram of a structure of an artificial intelligence main framework;
FIG. 1B and FIG. 1C are diagrams of application system frameworks according to the present invention;
FIG. 1D is a diagram of an optional hardware structure of a terminal;
FIG. 2 is a diagram of a structure of a server;
FIG. 3 to FIG. 5 are diagrams of a system architecture according to this application;
FIG. 6 shows a procedure of a cloud service;
FIG. 7 is a schematic flowchart of a data processing method according to an embodiment of this application;
FIG. 8 to FIG. 12B are diagrams of a model processing process;
FIG. 13 is a diagram of a structure of a data processing apparatus according to an embodiment of this application;
FIG. 14 is a diagram of a structure of a terminal device according to an embodiment of this application;
FIG. 15 is a diagram of a structure of a server according to an embodiment of this application; and
FIG. 16 is a diagram of a structure of a chip according to an embodiment of this application.

### DESCRIPTION OF EMBODIMENTS

The following describes embodiments of the present invention with reference to the accompanying drawings in embodiments of the present invention. Terms used in implementations of the present invention are merely intended to explain specific embodiments of the present invention, and are not intended to limit the present invention.

The following describes embodiments of this application with reference to the accompanying drawings. A person of ordinary skill in the art may know that, with development of technologies and emergence of new scenarios, the technical solutions provided in embodiments of this application are also applicable to similar technical problems.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, which is merely a distinguishing manner that is used when objects having a same attribute are described in embodiments of this application. In addition, the terms "include", "have" and any other variants mean to cover a non-exclusive inclusion, so that a process, method, system, product, or device that includes a series of units is not necessarily limited to those units, but may include other units not expressly listed or inherent to such a process, method, product, or device.

The terms "substantially (substantially)", "about (about)", and the like used in this specification are approximation terms rather than degree terms, and are intended to take into account inherent deviations of measured values or computed values that are known to a person of ordinary skill in the art. In addition, in descriptions of embodiments of the present invention, "may (may)" indicates "one or more possible embodiments". The terms "use (use)", "using (using)", and "used (used)" used in this specification may be considered to be synonymous with the terms "utilize (utilize)", "utilizing (utilizing)", and "utilized (utilized)" respectively. In addition, the term "example (example)" is intended to indicate an example or an illustration.

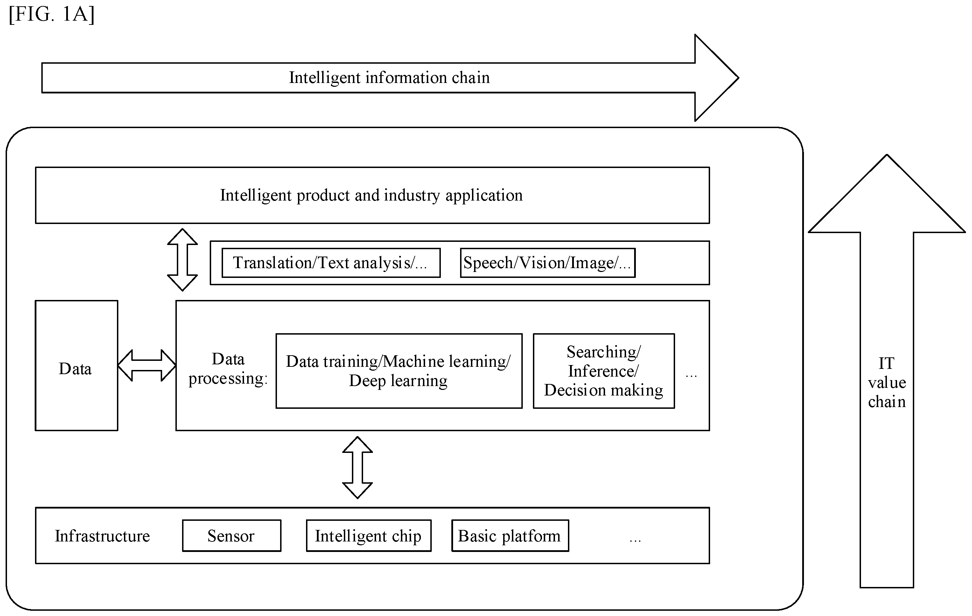

An overall working procedure of an artificial intelligence system is first described. FIG. 1A is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

### (1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip like a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

### (2) Data

Data at an upper layer of the infrastructure indicates a data source in the field of artificial intelligence. The data relates to a graph, an image, a speech, and a text, further relates to internet of things data of a conventional device, and includes service data of an existing system and sensing data such as force, a displacement, a liquid level, a temperature, and humidity.

### (3) Data processing

The data processing usually includes manners such as data training, machine learning, deep learning, searching, inference, and decision making.

The machine learning and the deep learning may mean performing symbolic and formal intelligent information modeling, extraction, preprocessing, training, and the like on data.

The inference is a process in which human intelligent inference is simulated in a computer or an intelligent system, and machine thinking and problem resolving are performed by using formalized information according to an inference control policy. A typical function is searching and matching.

The decision-making is a process of making a decision after intelligent information is inferred, and usually provides functions such as classification, ranking, and prediction.

### (4) General capability

After data processing mentioned above is performed on the data, some general capabilities may be further formed based on a data processing result. For example, the general capabilities may be an algorithm or a general system, for example, translation, text analysis, computer vision processing, speech recognition, and image recognition.

### (5) Intelligent product and industry application

The intelligent product and industry application are products and applications of the artificial intelligence system in various fields, and are encapsulation of the overall artificial intelligence solution and product implementation of intelligent information decision making, to implement final application. Application fields of the intelligent product and industry application mainly include: intelligent terminals, intelligent transportation, intelligent health care, autonomous driving, smart cities, and the like.

Application scenarios of this application are first described. This application may be applied, but not limited, to an application with an artificial intelligence generated content (artificial intelligence generated content, AIGC) function (which may be referred to as a synthetic application for short below), a cloud service provided by a server on a cloud side, or the like. The following provides separate descriptions.

### I. Synthetic application

A product form in embodiments of this application may be a synthetic application. The synthetic application may run on a terminal device or a server on a cloud side.

In a possible implementation, the synthetic application may implement a data generation task performed based on input data (for example, an image, a text, an audio, or a video). The synthetic application may execute the data generation task in response to the entered input data (for example, the image, the text, the audio, or the video), to obtain generated data.

For example, the data generation task may be but is not limited to the following tasks.

Text generation task: Various types of text content can be generated, including news reports, blog articles, product descriptions, social media posts, and the like. A logical and coherent text can be generated based on a given topic and requirement.

Image generation task: Images can be generated, including illustrations, art works, design drafts, and the like. Image content related to a given description or keyword can be generated.

Audio generation task: Speech content can be generated, including text reading, a reply of a voice assistant, and the like. Human speech features and tones can be stimulated, to make a generated speech sound more natural.

Content abstract and summary task: A large amount of text content can be read, to generate an abstract or a summary. Key information can be extracted from a text and presented to a user in a concise manner.

Language translation task: Language translation can be performed, to translate a text from one language to another language. A plurality of language pairs can be processed, and an accurate translation result can be provided.

Automatic reply and customer service: This task can be used to automatically reply to a question of the user and provide a customer service. An intention of the user can be understood, and an accurate answer or suggestion can be provided.

In a possible implementation, the user may start the synthetic application installed on the terminal device, and enter the input data (for example, the image, the text, the audio, or the video). The synthetic application may perform data generation on the input data according to the method provided in embodiments of this application, and present the generated data to the user (a presentation manner may be but is not limited to displaying, saving, uploading to the cloud side, or the like).

In a possible implementation, the user may start the synthetic application installed on the terminal device, and enter the input data. The synthetic application may send the input data to the server on the cloud side. The server on the cloud side performs data generation on the input data according to the method provided in embodiments of this application, and returns generated data to the terminal device. The terminal device may present the generated data to the user (a presentation manner may be but is not limited to displaying, saving, uploading to the cloud side, or the like).

The following separately describes the synthetic application in embodiments of this application from perspectives of a functional architecture and a product architecture for implementing a function.

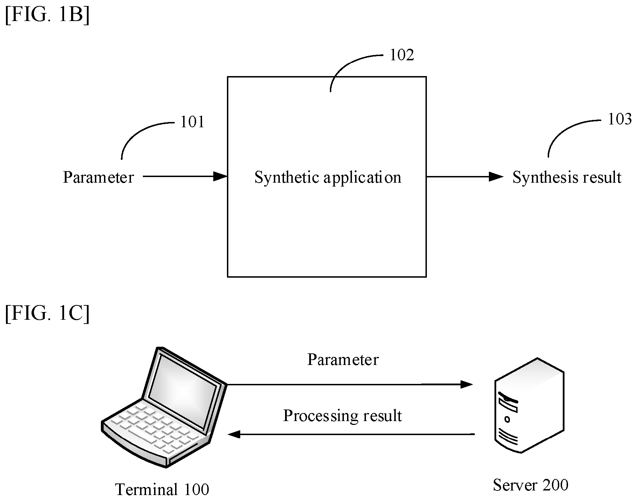

FIG. 1B is a diagram of a functional architecture of a synthetic application according to an embodiment of this application.

In a possible implementation, as shown in FIG. 1B, a synthetic application 102 may receive an entered parameter 101 (for example, including input data) and generate production data 103. The synthetic application 102 may be executed on (for example) at least one computer system, and includes computer code. When the computer code is executed by one or more computers, the computers are enabled to execute a natural language model obtained through training according to the method provided in embodiments of this application.

FIG. 1C is a diagram of an entity architecture for running a synthetic application according to an embodiment of this application.

FIG. 1C is a diagram of an architecture of a system. The system may include a terminal 100 and a server 200. The server 200 may include one or more servers (in FIG. 1C, an example in which one server is included is used for description), and the server 200 may provide a synthetic function service for one or more terminals.

A synthetic application may be installed on the terminal 100, or a web page related to a synthetic function may be opened. The application and the web page may provide an interface. The terminal 100 may receive a related parameter entered by a user on a synthetic function interface, and send the parameter to the server 200. The server 200 may obtain a processing result based on the received parameter, and return the processing result to the terminal 100.

It should be understood that, in some optional implementations, the terminal 100 may alternatively autonomously complete an action of obtaining a processing result based on a received parameter, without cooperation of the server. This is not limited in embodiments of this application.

The following describes a product form of the terminal 100 in FIG. 1C.

In embodiments of this application, the terminal 100 may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

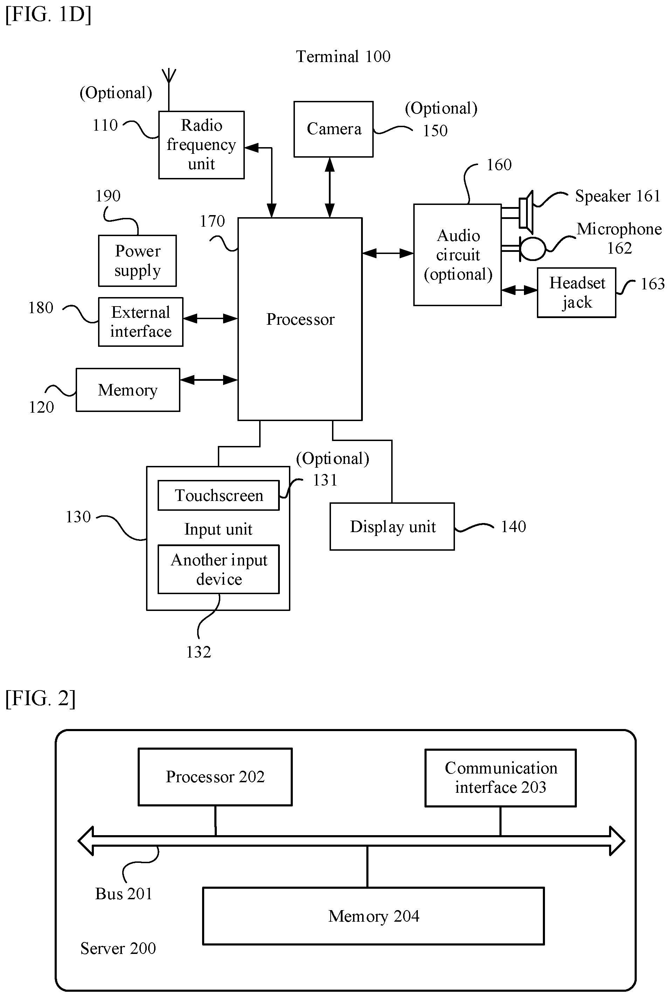

FIG. 1D is a diagram of an optional hardware structure of the terminal 100.

As shown in FIG. 1D, the terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art can understand that FIG. 1D is merely an example of the terminal or a multi-functional device but constitutes no limitation on the terminal or the multi-functional device. The terminal or the multi-functional device may include more or fewer components than those shown in the figure, or some components may be combined, or there may be different components.

The input unit 130 may be configured to receive entered digital or character information, and generate a key signal input related to a user setting and function control of the portable multi-functional apparatus. Specifically, the input unit 130 may include a touchscreen 131 (optional) and/or another input device 132. The touchscreen 131 may collect a touch operation performed by the user on or near the touchscreen (for example, an operation performed by the user on or near the touchscreen by using any proper object like a finger, a joint, or a stylus), and drive a corresponding connection apparatus based on a preset program. The touchscreen may detect a touch action performed by the user on the touchscreen, convert the touch action into a touch signal, and send the touch signal to the processor 170, and can receive a command sent by the processor 170 and execute the command. The touch signal includes at least touch point coordinate information. The touchscreen 131 may provide an input interface and an output interface between the terminal 100 and the user. In addition, the touchscreen may be implemented in a plurality of types such as a resistive type, a capacitive type, an infrared ray type, and a surface acoustic wave type. In addition to the touchscreen 131, the input unit 130 may include the another input device. Specifically, the another input device 132 may include but is not limited to one or more of the following: a physical keyboard, a functional button (for example, a volume control button 132 or an on/off button 133), a trackball, a mouse, a joystick, and the like.

The input device 132 may receive entered input data or the like.

The display unit 140 may be configured to display information entered by the user, information provided for the user, various menus of the terminal 100, an interaction interface, a file, and/or playing of any multimedia file. In this embodiment of this application, the display unit 140 may be configured to display an interface of the synthetic application, generated data, and the like.

The memory 120 may be configured to store instructions and data. The memory 120 may mainly include an instruction storage region and a data storage region. The data storage region may store various types of data such as a multimedia file and a text. The instruction storage region may store software units such as an operating system, an application, and instructions for at least one function, or subsets and extended sets thereof. The memory may further include a non-volatile random access memory, and provide hardware, software, and data resources in a management and computing processing device to the processor 170, to support control on software and an application. The memory is further configured to: store a multimedia file, run a program, and store an application.

The processor 170 is a control center of the terminal 100, connects various parts of the entire terminal 100 through various interfaces and lines, and performs various functions of the terminal 100 and processes data by running or executing the instructions stored in the memory 120 and invoking the data stored in the memory 120, to implement overall control on the terminal device. Optionally, the processor 170 may include one or more processing units. Preferably, an application processor and a modem processor may be integrated in the processor 170. The application processor mainly processes an operating system, a user interface, an application, and the like. The modem processor mainly processes wireless communication. It may be understood that the modem processor may alternatively not be integrated into the processor 170. In some embodiments, the processor and the memory may be implemented on a single chip. In some embodiments, the processor and the memory may alternatively be implemented on separate chips. The processor 170 may be further configured to: generate a corresponding operation control signal, send the operation control signal to a corresponding component in the computing processing device, and read and process data in software, especially read and process the data and the program in the memory 120, so that each functional module performs a corresponding function, to control a corresponding component to perform an action as required by an instruction.

The memory 120 may be configured to store software code related to a data processing method. The processor 170 may perform steps of a data processing method of a chip, or may schedule another unit (for example, the input unit 130 and the display unit 140) to implement a corresponding function.

The radio frequency unit 110 (optional) may be configured to send and receive signals in an information sending/receiving process or a call process, for example, receive downlink information from a base station and then send the downlink information to the processor 170 for processing, or send uplink-related data to the base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. Any communication standard or protocol may be used for the wireless communication, including but not limited to a global system for mobile communications (Global System for Mobile Communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In this embodiment of this application, the radio frequency unit 110 may send input data to the server 200, and receive generated data sent by the server 200.

It should be understood that the radio frequency unit 110 is optional, and may be replaced with another communication interface, for example, may be a network interface.

The terminal 100 further includes the power supply 190 (for example, a battery) for supplying power to various components. Preferably, the power supply may be logically connected to the processor 170 through a power management system, to implement functions such as charging and discharging management and power consumption management through the power management system.

The terminal 100 further includes the external interface 180. The external interface may be a standard micro USB interface or a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of methods described below may be applied to the terminal 100 shown in FIG. 1D.

The following describes a product form of the server 200 in FIG. 1C.

FIG. 2 is a diagram of a structure of the server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 2, but this does not mean that there is only one bus or only one type of bus.

The processor 202 may be any one or more of processors such as a central processing unit (central processing unit, CPU), a graphics processing unit (graphics processing unit, GPU), a micro processor (micro processor, MP), and a digital signal processor (digital signal processor, DSP).

The memory 204 may include a volatile memory (volatile memory), for example, a random access memory (random access memory, RAM). The memory 204 may alternatively include a non-volatile memory (non-volatile memory), for example, a read-only memory (read-only memory, ROM), a flash memory, a hard disk drive (hard disk drive, HDD), or a solid state drive (solid state drive, SSD).

The memory 204 may be configured to store software code related to the data processing method. The processor 202 may perform steps of the data processing method of the chip, or may schedule another unit to implement a corresponding function.

It should be understood that the terminal 100 and the server 200 may be central or distributed devices. A processor (for example, the processor 170 and the processor 202) in the terminal 100 and the server 200 may be a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the processor may be a hardware system having an instruction execution function, for example, a CPU or a DSP, or may be a hardware system having no instruction execution function, for example, an ASIC or an FPGA, or may be a combination of the hardware system having no instruction execution function and the hardware system having an instruction execution function.

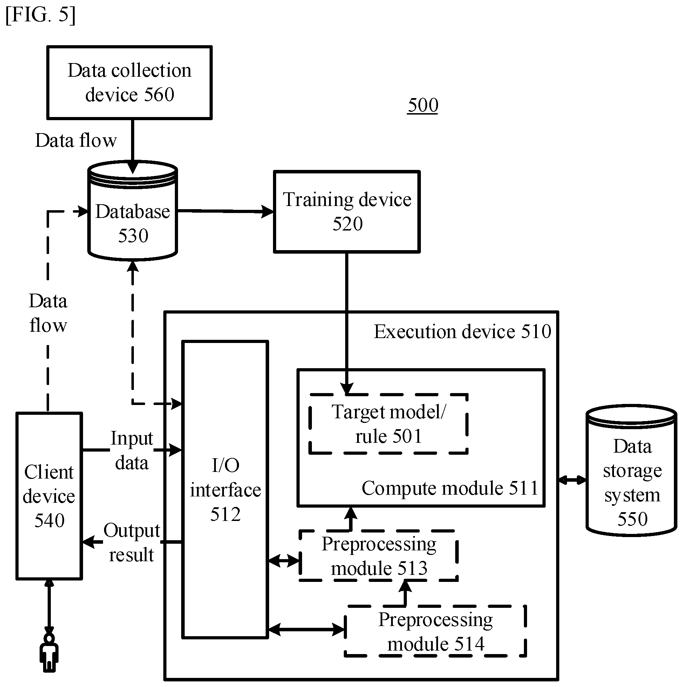

It should be understood that steps related to a model inference process in embodiments of this application relate to an AI-related operation. When the AI operation is performed, an instruction execution architecture of the terminal device and the server is not limited to the foregoing architecture in which the processor and the memory are combined. A system architecture provided in embodiments of this application is described below in detail with reference to FIG. 5.

FIG. 5 is a diagram of a system architecture according to an embodiment of this application. As shown in FIG. 5, a system architecture 500 includes an execution device 510, a training device 520, a database 530, a client device 540, a data storage system 550, and a data collection system 560.

The execution device 510 includes a compute module 511, an I/O interface 512, a preprocessing module 513, and a preprocessing module 514. The compute module 511 may include a target model/rule 501, and the preprocessing module 513 and the preprocessing module 514 are optional.

The execution device 510 may be the foregoing terminal device or server that runs the synthetic application.

The data collection device 560 is configured to collect a training sample. The training sample may be a program file (including program code and program input data), or the like. After collecting the training sample, the data collection device 560 stores the training sample in the database 530.

The training device 520 may train a to-be-trained neural network based on the training sample maintained in the database 530, to obtain the target model/rule 501.

It should be noted that during actual application, the training sample maintained in the database 530 is not necessarily collected by the data collection device 560, and may be received from another device. In addition, it should be noted that the training device 520 does not necessarily completely train the target model/rule 501 based on the training sample maintained in the database 530, and may perform model training by obtaining a training sample from a cloud or another location. The foregoing descriptions should not be construed as a limitation on embodiments of this application.

The target model/rule 501 obtained through training by the training device 520 may be applied to different systems or devices, for example, applied to the execution device 510 shown in FIG. 5. The execution device 510 may be a terminal, for example, a mobile phone terminal, a tablet computer, a notebook computer, an augmented reality (augmented reality, AR)/virtual reality (virtual reality, VR) device, or a vehicle-mounted terminal; or may be a server or the like.

Specifically, the training device 520 may transfer a trained model to the execution device 510.

In FIG. 5, the execution device 510 is provided with the input/output (input/output, I/O) interface 512, configured to exchange data with an external device. A user may input data (for example, input data in embodiments of this application) to the I/O interface 512 through the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the compute module 511 may be directly used to process the input data.

When the execution device 510 preprocesses the input data, or when the compute module 511 in the execution device 510 performs a related processing process such as computing, the execution device 510 may invoke data, code, and the like in the data storage system 550 for corresponding processing, or may store data, instructions, and the like obtained through corresponding processing in the data storage system 550.

Finally, the I/O interface 512 provides a processing result (for example, the generated data) for the client device 540, to provide the processing result for the user.

In the case shown in FIG. 5, the user may manually provide the input data, and "manually providing the input data" may be implemented through an operation on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may be specifically presented in a specific manner of displaying, a sound, an action, or the like. The client device 540 may also be used as a data collection end, to collect, as new sample data, input data input to the I/O interface 512 and an output result output from the I/O interface 512 that are shown in the figure, and store the new sample data in the database 530. Certainly, the client device 540 may alternatively not perform collection. Instead, the I/O interface 512 directly stores, in the database 530 as new sample data, the input data input to the I/O interface 512 and the output result output from the I/O interface 512 that are shown in the figure.

It should be noted that FIG. 5 is merely a diagram of a system architecture according to an embodiment of this application. A location relationship between devices, components, modules, and the like shown in the figure does not constitute any limitation. For example, in FIG. 5, the data storage system 550 is an external memory relative to the execution device 510. In another case, the data storage system 550 may alternatively be deployed in the execution device 510. It should be understood that the execution device 510 may be deployed in the client device 540.

Details from a perspective of model inference are as follows.

In embodiments of this application, the compute module 511 in the execution device 510 may obtain the code stored in the data storage system 550, to implement steps related to a model inference process in embodiments of this application.

In embodiments of this application, the compute module 511 in the execution device 510 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system having an instruction execution function, for example, a CPU or a DSP, or may be a hardware system having instruction execution function, for example, an ASIC or an FPGA, or may be a combination of the hardware system having no instruction execution function and the hardware system having an instruction execution function.

Specifically, the compute module 511 in the execution device 510 may be a hardware system having an instruction execution function. The steps related to the model inference process provided in embodiments of this application may be software code stored in a memory. The compute module 511 in the execution device 510 may obtain the software code from the memory, and execute the obtained software code to implement the steps related to the model inference process provided in embodiments of this application.

It should be understood that the compute module 511 in the execution device 510 may be a combination of a hardware system having no instruction execution function and a hardware system having an instruction execution function. Some of the steps related to the model inference process provided in embodiments of this application may be implemented by the hardware system having no instruction execution function in the compute module 511 in the execution device 510. This is not limited herein.

Details from a perspective of model training are as follows.

In embodiments of this application, the training device 520 may obtain code stored in a memory (which is not shown in FIG. 5, and may be integrated into the training device 520 or deployed separately from the training device 520), to implement steps related to model training in embodiments of this application.

In embodiments of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system having an instruction execution function, for example, a CPU or a DSP, or may be a hardware system having no instruction execution function, for example, an ASIC or an FPGA, or may be a combination of the hardware system having no instruction execution function and the hardware system having an instruction execution function.

It should be understood that the training device 520 may be a combination of a hardware system having no instruction execution function and a hardware system having an instruction execution function. Some of the steps related to model training provided in embodiments of this application may be implemented by the hardware system having no instruction execution function in the training device 520. This is not limited herein.

### II. Synthetic function-type cloud service provided by the server

In a possible implementation, the server may provide a synthetic function service for a terminal side through an application programming interface (application programming interface, API).

A terminal device may send a related parameter (for example, including input data) to the server through an API provided by a cloud. The server may obtain a processing result (for example, generated data) based on the received parameter, and return the processing result to the terminal.

For descriptions of the terminal and the server, refer to the descriptions in the foregoing embodiments. Details are not described herein again.

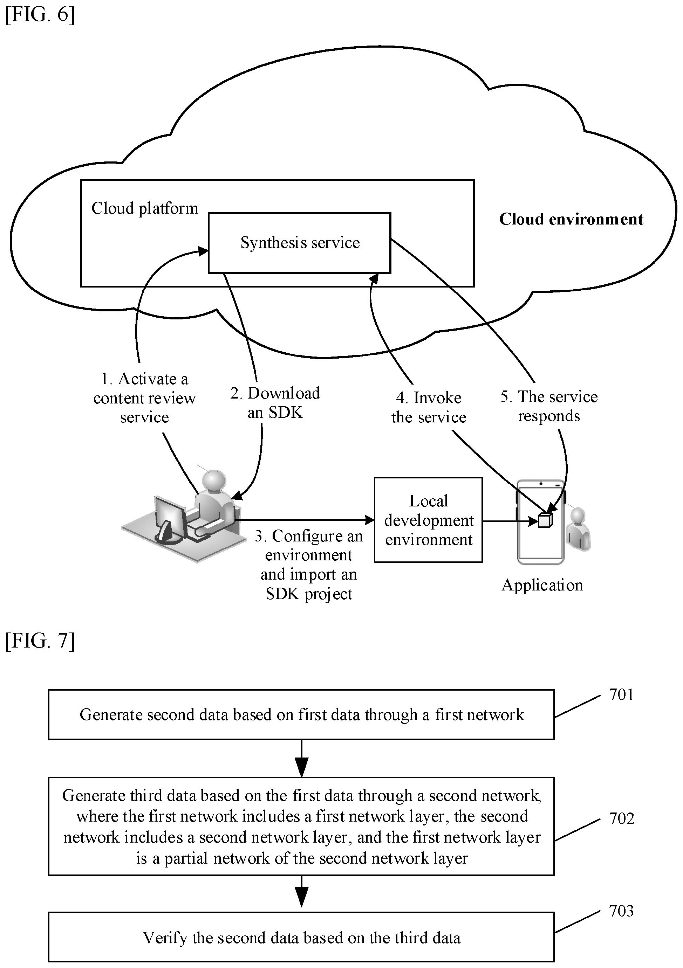

FIG. 6 shows a procedure of using a synthetic function-type cloud service provided by a cloud platform.
1. Activate and purchase a content review service
2. A user may download a software development kit (software development kit, SDK) corresponding to the content review service. Usually, the cloud platform provides SDKs of a plurality of development versions for the user to select based on a development environment requirement, for example, a Java-version SDK, a Python-version SDK, a PHP-version SDK, and an Android-version SDK.
3. After locally downloading an SDK of a corresponding version as required, the user imports an SDK project to a local development environment, and performs configuration and debugging in the local development environment. Another function may be further developed in the local development environment, to form an application that integrates a synthetic function-type capability.
4. In a use process of a synthetic function-type application, when the synthetic function is required, invoking of the API for the synthetic function may be triggered. When an application triggers the synthetic function, an API request is initiated to a running instance of the synthetic function-type service in a cloud environment, where the API request carries input data, and the running instance in the cloud environment processes the input data to obtain a processing result (for example, generated data).
5. The cloud environment returns the processing result to the application, to complete one invocation of the synthetic function service.

In addition to an application and a cloud service, an implementation form of this application may alternatively be a large model inference acceleration library or a large model application SDK.

For ease of understanding solutions in embodiments of this application, the following briefly describes possible application scenarios of embodiments of this application with reference to FIG. 2 to FIG. 4 by using text generation as an example.

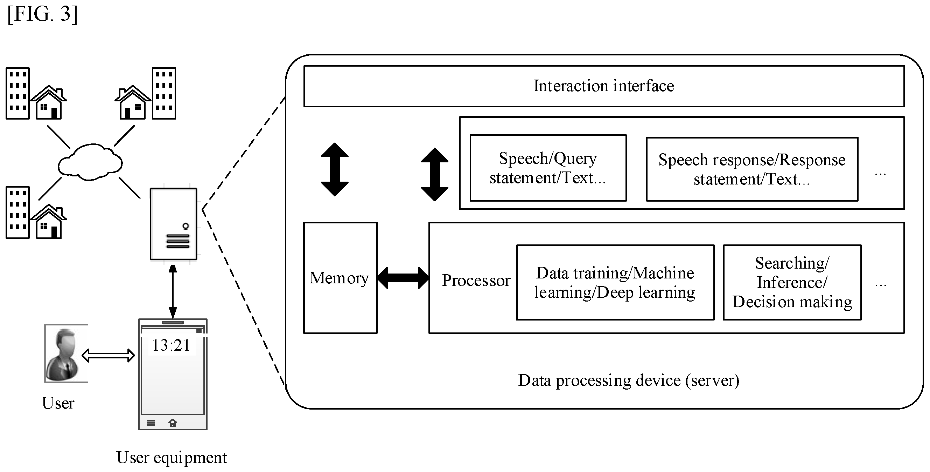

FIG. 3 shows a natural language processing system. The natural language processing system includes user equipment and a data processing device. The user equipment includes an intelligent terminal, for example, a mobile phone, a personal computer, or an information processing center. The user equipment is an initiator of natural language data processing. As an initiator of a request for language questioning and answering, querying, or the like, a user usually initiates the request through the user equipment.

The data processing device may be a device or a server that has a data processing function, for example, a cloud server, a network server, an application server, or a management server. The data processing device receives a query statement/speech/text or the like from an intelligent terminal through an interaction interface; then performs, by using a memory storing data and a processor processing data, language data processing in a manner of machine learning, deep learning, searching, inference, decision-making, or the like; and feeds back a processing result to the user equipment. The memory in the data processing device may be a general name, and includes a local storage and a database that stores historical data. The database may be on the data processing device, or may be on another network server.

In the natural language processing system shown in FIG. 3, the user equipment may receive an instruction of the user. For example, the user equipment may receive a text segment entered by the user, and then initiate a request to the data processing device, so that the data processing device executes a natural language processing application (for example, natural language generation, text classification, text inference, named entity recognition, or translation) on the text segment obtained by the user equipment, to obtain a processing result (for example, a predicted word result, a classification result, an inference result, a named entity recognition result, or a translation result) of the corresponding natural language processing application for the text segment.

In this embodiment of this application, the user equipment may receive an instruction of the user. For example, the user equipment may receive a text segment (for example, input data) entered by the user, and then initiate a request to the data processing device, so that the data processing device executes a natural language processing application (for example, text synthesis) for the text segment obtained by the user equipment, to obtain a processing result (for example, generated data) of the corresponding natural language processing application for the text segment.

In FIG. 3, the data processing device may process the foregoing text data according to a method provided in embodiments of this application.

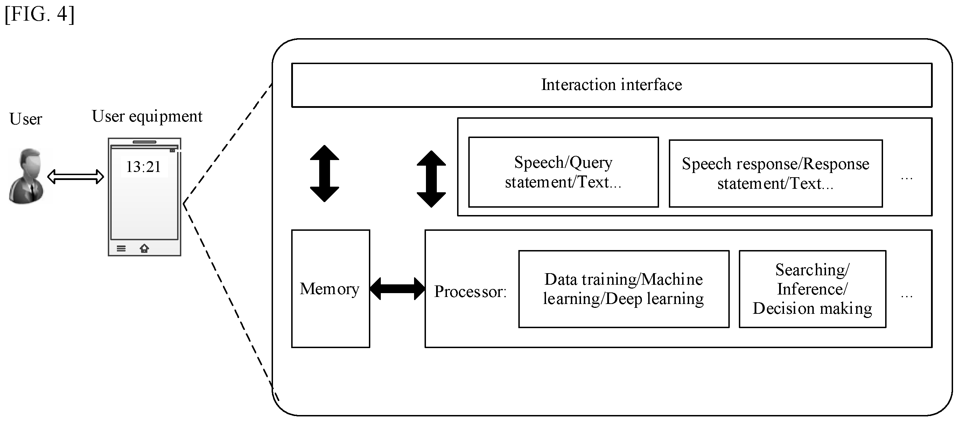

FIG. 4 shows another natural language processing system. In FIG. 4, user equipment directly serves as a data processing device. The user equipment can directly receive an input from a user, and the input is directly processed by hardware of the user equipment. A specific process is similar to that in FIG. 3. For details, refer to the foregoing descriptions. Details are not described herein again.

FIG. 4 is a diagram of a device 300 related to natural language processing according to an embodiment of this application.

The processors in FIG. 3 and FIG. 4 may perform data training/machine learning/deep learning through a neural network model or another model, and perform a natural language processing application (for example, program synthesis) on text data (for example, an input data text described in this embodiment of this application) through a model (for example, the natural language model in this embodiment of this application) obtained through final data training or learning, to obtain a corresponding processing result.

Embodiments of this application relate to massive application of the neural network. Therefore, for ease of understanding, the following first describes related terms and related concepts such as the neural network in embodiments of this application.

### (1) Neural network

The neural network may include a neuron. The neuron may be an operation unit that uses xs (namely, input data) and an intercept of 1 as an input. An output of the operation unit may be as follows: ${h}_{W , b} \left(x\right) = f \left({W}^{T}x\right) = f \left({\sum }_{s = 1}^{n} {W}_{s} {x}_{s} + b\right) .$

Herein, s=1, 2, ..., and n, n is a natural number greater than 1, Ws is a weight of xs, b is a bias of the neuron, and f is an activation function (activation function) of the neuron, and is used to introduce a nonlinear characteristic into the neural network, to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

### (2) Transformer layer

A neural network includes an embedding layer and at least one transformer layer. The at least one transformer layer may be N transformer layers (N is an integer greater than 0), and each transformer layer includes an attention layer, an add and norm (add & norm) layer, a feedforward (feedforward) layer, and an add and norm layer that are sequentially adjacent to each other. At the embedding layer, embedding processing is performed on a current input to obtain a plurality of embedding vectors. At the attention layer, P input vectors are obtained from a previous layer of a first transformer layer. An intermediate vector corresponding to any first input vector in the P input vectors is obtained based on an association degree between the first input vector and each input vector within a preset attention window range by using the first input vector as a center. In this way, P intermediate vectors corresponding to the P input vectors are determined. At the pooling layer, the P intermediate vectors are combined into Q output vectors. A plurality of output vectors obtained from a last transformer layer in the transformer layers are used as feature representations of the current input.

### (3) Attention mechanism (attention mechanism)

The attention mechanism simulates an internal process of an observational behavior of a creature, is a mechanism that aligns internal experience with external feelings to increase observation precision of some regions, and can quickly select high-value information from a large amount of information by using limited attention resources. The attention mechanism can quickly extract an important feature of sparse data, and therefore is widely used in natural language processing tasks, especially machine translation. A self-attention mechanism (self-attention mechanism) is improvement of the attention mechanism. The self-attention mechanism becomes less dependent on external information and is better at capturing an internal correlation of data or features. An essential idea of the attention mechanism may be rewritten as the following formula:

Herein, Lx=||Source|| represents a length of a source. The formula means that constituent elements in the source are assumed to include a series of data pairs. In this case, an element query in a target (Target) is provided, similarity or correlation between the query and each key is computed to obtain a weight coefficient of a value corresponding to each key, and then weighted summation is performed on values, to obtain a final attention value. Therefore, the attention mechanism is essentially to perform weighted summation on values of the elements in the source, and a query and a key are used to compute a weight coefficient of a corresponding value. Conceptually, attention may be understood as selecting a small amount of important information from a large amount of information, focusing on the important information, and ignoring most of unimportant information. A process of focusing is reflected in computation of the weight coefficient. A greater weight indicates that a value corresponding to the weight is more focused, that is, the weight indicates importance of information, and the value is the information corresponding to the weight. The self-attention mechanism may be understood as an intra-attention (intra-attention) mechanism. The attention mechanism occurs between the element query in the target and all the elements in the source. The self-attention mechanism is an attention mechanism that occurs between elements in a source or between elements in a target, and may also be understood as an attention computation mechanism in a special case of Target=Source. A specific computation process of the self-attention mechanism is the same except that a computation object changes.

### (4) Natural language processing (natural language processing, NLP)

A natural language (natural language) is a human language, and natural language processing (NLP) is processing of the human language. Natural language processing is a process of systematic analysis, understanding, and information extraction of text data in an intelligent and efficient manner. Through the NLP and components thereof, massive chunks of text data can be managed, or a large quantity of automated tasks can be executed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

### (5) Pre-trained language model (pre-trained language model)

The pre-trained language model is a natural language sequence encoder, and encodes each word in a natural language sequence into a vector representation to perform a prediction task. Training for the pre-trained language model includes two stages. At a pre-training (pre-training) stage, the model is trained for a language model task on a large scale of unsupervised texts to learn a word representation. At a fine-tuning (fine-tuning) stage, the model is initialized by using parameters learned at the pre-training stage, and is trained in few steps on downstream tasks (downstream tasks) such as text classification (text classification) and sequence labeling (sequence labeling), so that semantic information obtained through pre-training can be successfully migrated to the downstream tasks.

### (6) Autoregressive language model (autoregressive language model)

The autoregressive language model is a model that can predict, based on a given context (for example, "a mobile phone is very"), a next word (for example, "good") that may follow. The model is usually used to predict a right-side following word when a left-side preceding text is given, and may also be used to predict a specific middle word when a left-side preceding text and a right-side following text are given.
(7) Large language model: a language model with a large number of parameters, where a sentence is segmented and encoded into floating-point vectors, and an output is a new word output through projection mapping and top-1 computation.
(8) Inference/Deployment: forward computing process of the neural network.
(9) Inference latency: time required for forward computing of the neural network.
(10) KV cache: A KV vector is an output of k and v linear mapping layers at the transformer layers, and an output of a plurality of words in a full part is combined into two Batch*Sequence*Dim tensors, and is dynamically appended to an end location for tensors in an incremental graph.
(11) Token: a minimum unit in a text, where usually, the token may be a word, a number, a punctuation, a single letter, or any single element that can be used for text analysis.
(12) Speculative sampling: a manner used to improve an arithmetic intensity during large language model inference, and can ensure using of sampling distribution that is completely the same as that of an original model. Two models are used in this manner. One is the original target model, and the other is an approximation model that is much smaller than the original model. The approximation model is used for serial autoregressive decoding, and the large model is used for result verification. The large model can verify K tokens in parallel at a time. Therefore, a quantity of autoregressive times of the large model can be greatly reduced, thereby improving inference performance of the large model.
(13) Small speculative model: an approximation model that is much smaller than a large model and used in speculative sampling.
(14) Separated deployment: Full inference and incremental inference of a large model are separately deployed on different machines, and full inference and incremental inference can be performed by using different batch sizes.
(15) Dynamic batch: namely, continuous batch, which means that during batch inference, a decoded sentence is returned in advance and a new sentence is dynamically added for decoding.
(16) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to converge the error loss. The back propagation algorithm is an error-loss-centered back propagation motion intended to obtain a parameter like a weight matrix of an optimal super-resolution model.

### (17) Loss function

In a process of training a deep neural network, because it is expected that an output of the deep neural network is maximally close to an actually predicted value, a current predicted value of the network may be compared with a target value that is expected, and then a weight vector at each layer of the neural network is updated based on a difference between the current predicted value and the target value (certainly, there is usually an initialization process before the first update, in other words, a parameter is preconfigured for each layer of the deep neural network). For example, if the predicted value of the network is larger, the weight vector is adjusted to lower the predicted value, and adjustment is continuously performed, until the deep neural network can predict the target value that is actually expected or a value close to the target value that is actually expected. Therefore, "how to obtain, through comparison, a difference between a predicted value and a target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

Large language model inference is mainly divided into two stages. One is a full (prefill) inference stage, where all words entered by a user are integrally input to a network for computing, to obtain a final output with one word. In this stage, a plurality of words can be inferred in parallel, to effectively use computing and memory bandwidths of hardware. The other is an incremental (decoding) inference stage, where the full inference output is used as an input of a current step, and is input to a network for computing, and then an output of a current word is used as an input of a next step until decoding is completed. This stage is an autoregressive process, and decoding needs to be performed word by word. A parallelism degree is low, and hardware utilization is low. Repeated memory access for weights wastes the memory bandwidth, and a computing unit cannot be fully used. However, if a large model can decode a plurality of words in parallel in a single step, a latency is almost not increased compared with that of decoding a single word. In this way, hardware utilization can be improved.

To improve a parallelism degree of an incremental stage of the large model, an idea of predicted execution, namely, speculative sampling, is applied to large model inference. This manner can ensure completely the same sampling distribution as that in a manner of using an original model. Two models are used in this manner. One is the original target model, and the other is an approximation model that is much smaller than the original model. The approximation model is used for serial autoregressive decoding, and the large model is used for result verification. The large model can verify a plurality of tokens in parallel at a time. Therefore, a quantity of autoregressive times of the large model can be greatly reduced, and an arithmetic intensity of the large model inference can be improved, thereby improving inference performance of the large model.

Speculative inference can accelerate the large model inference without a loss. However, additional training and deployment of a small speculative model are required. The small model also requires maintenance and deployment costs. When a degree of matching between the large model and the small model is low, the speculative inference may even cause performance rollback and an inference cost increase. Therefore, how to minimize the costs of the small model and ensure a high acceleration ratio of the large model inference is an important issue of the speculative inference.

To resolve the foregoing problems, embodiments of this application provide a data processing method. The following describes in detail a model training method in embodiments of this application with reference to the accompanying drawings.

FIG. 7 is a schematic flowchart of a data processing method according to an embodiment of this application. As shown in FIG. 7, the data processing method provided in this embodiment of this application may include steps 701 to 703. The following separately describes these steps in detail.

701: Generate second data based on first data through a first network.

702: Generate third data based on the first data through a second network, where the first network includes a first network layer, the second network includes a second network layer, and the first network layer is a partial network of the second network layer.

Large language model inference is mainly divided into two stages. One is a full (prefill) inference stage, where all words entered by a user are integrally input to a network for computing, to obtain a final output with one word. In this stage, a plurality of words can be inferred in parallel, to effectively use computing and memory bandwidths of hardware. The other is an incremental (decoding) inference stage, where the full inference output is used as an input of a current step, and is input to a network for computing, and then an output of a current word is used as an input of a next step until decoding is completed. The embodiment corresponding to FIG. 7 may be steps in the incremental inference stage.

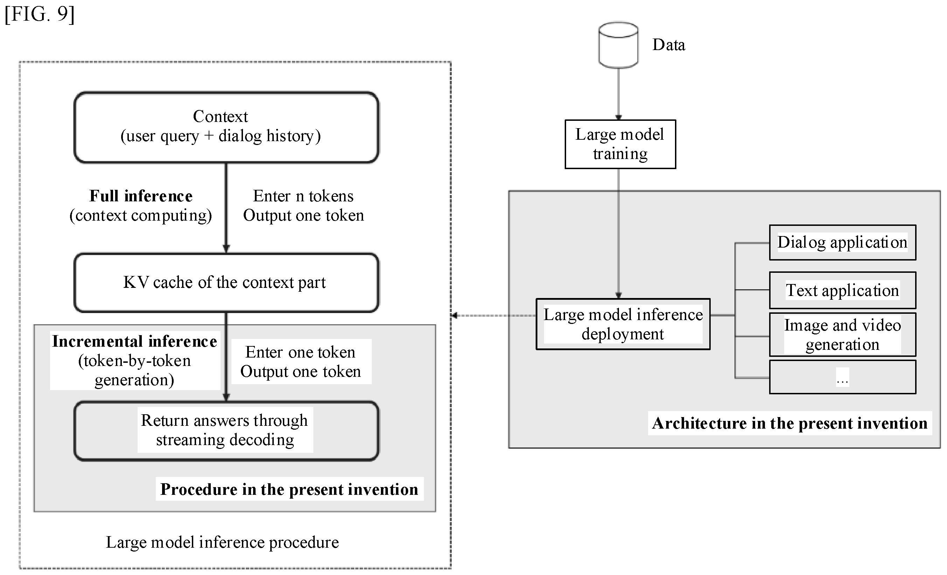

For example, FIG. 9 shows a large model inference architecture and procedure in this embodiment of this application. In an overall large model training and promotion system, embodiments of this application are mainly applied to an inference deployment node of a large model, and may be widely applied to an inference service in a large model application scenario like dialog acceleration, text generation, and AI image or video generation. In a large model inference procedure in a deployment node, embodiments of this application mainly relate to an incremental inference part, to reduce a quantity of incremental autoregressive steps and improve incremental inference performance of the large model.

The first network may be an approximation model, and the approximation model is used for serial autoregressive decoding. The second network may be a large model, and the large model is used for result verification. The large model can verify a plurality of tokens in parallel at a time. Therefore, a quantity of autoregressive times of the large model can be significantly reduced.

Step 701 may be an autoregressive generation process performed through the first network. For example, the first data may be a token obtained through full inference, and the first data may be processed through the first network to obtain a next token (namely, the second data) adjacent to the first data; or the first data may be a token generated by the first network in an autoregressive process, and the first data may be processed through the first network to obtain a next token (namely, the second data) adjacent to the first data.

In other words, in a possible implementation, before generating the second data based on the first data through the first network, the first data may be further generated based on fourth data through the first network. This step is a step of generating the first data in an autoregressive manner through the first network.

Step 702 may be a process of verifying the second data through the second network.

In a possible implementation, the first network and the second network may reuse network layers of different depths in an original model. Because the second network is used to verify data obtained by the first network, a depth of a network layer corresponding to the second network is higher. For example, the first network may include a first network layer (and may further include a first decoding layer), the second network includes a second network layer (and may further include a second decoding layer), and the first network layer is a partial network of the second network layer.

In a possible implementation, both the first network layer and the second network layer belong to a target neural network (namely, the original model, where in other words, the target neural network is a model used in a full inference process corresponding to the incremental inference process), the second network layer includes the first network layer and a third network layer connected to the first network layer, and the third network layer is closer to an output layer of the target neural network than the first network layer.

A plurality of available sub-models can be formed based on different depths of the original model. These sub-models are used as small speculative models, and original large model inference is divided into multi-stage speculative inference, to perform stage-by-stage acceleration.

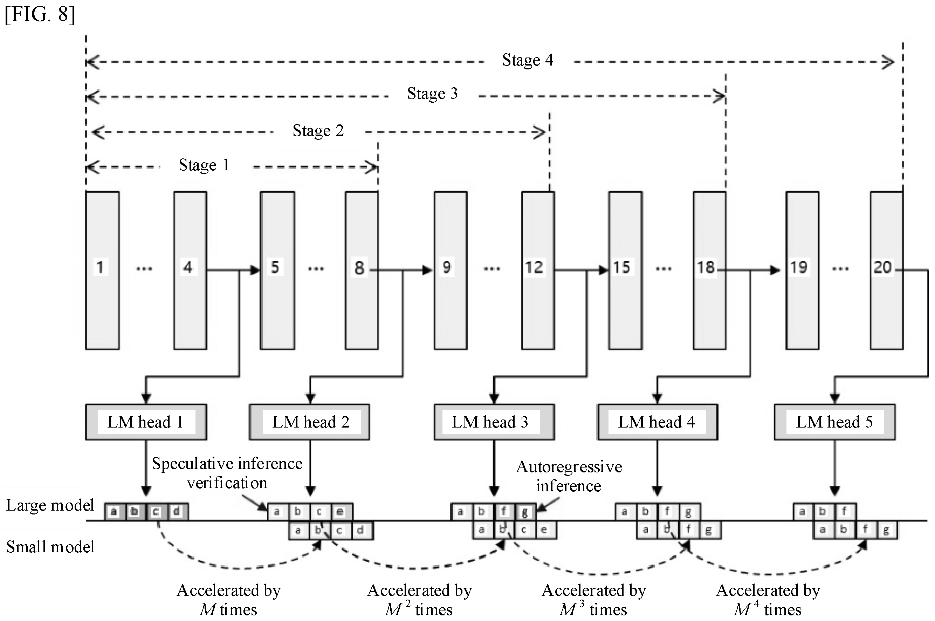

FIG. 8 is a diagram of a network structure. As shown in FIG. 8, an original large model includes 20 network layers, and four sub-models are obtained through division based on a depth, where an LM head i corresponds to a decoder head of an i^{th} small model. In an inference solution shown in FIG. 8, stage=4, that is, four-stage "nesting doll" speculative inference is performed, and i^{th}-stage speculative inference is to predict a decoding result of an (i+1)^{th} model through the i^{th} model, to accelerate inference of an (i+1)^{th} model. Through stage-by-stage acceleration, an exponential acceleration ratio is finally implemented.

For example, in FIG. 8, network layers 1 to 4 and an LM head 1 may be the first network, the network layers 1 to 4 may be the first network layer, network layers 5 to 8 and an LM head 2 may be the second network, and the network layers 5 to 8 may be the second network layer.

As a result verification model, the second network may verify a plurality of tokens in parallel at a time, to significantly reduce a quantity of autoregressive times. Similarly, the second network may also verify the first data in parallel. In a possible implementation, fifth data may be generated based on the fourth data through the second network. The action of generating the fifth data and the action of generating the third data are executed in parallel. The first data is verified based on the fifth data.

In a possible implementation, the first network includes the first network layer and the first decoding layer, and the second network includes the second network layer and the second decoding layer. In a process of verifying the second data, the first network may reuse a processing result of the first network layer.

Specifically, a first processing result may be obtained based on the first data through the first network layer, and the second data may be obtained based on the first processing result through the first decoding layer; and a second processing result may be obtained based on the first processing result through the third network layer, and the third data may be generated based on the second processing result through the second decoding layer.

In this embodiment of this application, a network (the second network) for performing the incremental verification process in a speculative inference process reuses a network (a part of the network, namely, the first network) for performing autoregressive inference, so that additional inference deployment overheads can be reduced. In addition, when the second network performs incremental verification, an inference result of the first network can be reused in a memory without additional latency, and computing overheads are reduced.

In addition, both the first network layer in the first network and the second network layer in the second network may be large models for full inference. Therefore, there is no need to additionally maintain and train a separate small model, thereby reducing costs. The small model occupies no additional deployment resource, and the memory can reuse a model parameter and a KV cache of the large model. Because an inference branch of the large model is reused, an inference result of a sub-model can be directly reused without an additional latency. The large model inference can cover overheads of the small model.

It should be understood that, in addition to the second network, more stages of verification networks (for example, a third network in this embodiment of this application) may be further set. Similar to the foregoing described relationship between the first network and the second network, the second network and the third network may also be constructed by using network layers of different depths in the large model. For example, the third network may include the third network layer, and the second network layer may be a part of the third network layer.

703: Verify the second data based on the third data.

In a possible implementation, verifying the second data based on the third data includes: when the third data is consistent with the second data, determining that verification on the second data succeeds; and when the third data is inconsistent with the second data, determining that verification on the second data fails.

In a possible implementation, sixth data may be generated based on the first data through the third network when it is determined that verification on the second data succeeds. The third network includes a fourth network layer, and the second network layer is a partial network of the fourth network layer. The second data is verified based on the sixth data. In other words, the verification process may be continued by using a next-stage verification network until a last-stage verification process.

In a possible implementation, when the third data is different from the second data, it may be determined that verification on the second data fails. In this case, the third data may be used as a next token adjacent to the first data, and the third data may be data on which verification succeeds. Then, the next-stage verification network (for example, the third network in this embodiment of this application) may verify the third data. Specifically, sixth data may be generated based on the first data through the third network, and the third data is verified based on the sixth data.

In a possible implementation, when the third data is different from the second data, it may be determined that verification on the second data fails. In this case, the third data may be used as a next token adjacent to the first data, and the third data may be data on which verification succeeds. Because the third data is generated by the second network, to ensure a matching degree in a next stage, autoregressive inference may be performed based on the third data through the second network. In a possible implementation, seventh data is generated based on the third data through the second network when it is determined that verification on the second data fails.

For example, as shown in FIG. 8, data generated by the first network includes a, b, c, and d, and data generated by the second network through verification is a, b, c, and e, where verification on d fails. Therefore, e is used as data on which current verification succeeds, and a, b, c, and e are used as objects of next-stage (third network) verification. Data generated by the third network through verification is a, b, and f. Because verification on c fails, the third network may generate g based on f, that is, the third network generates data g based on data f through autoregressive inference.

In a possible implementation, when the third data is different from the second data, it may be determined that verification on the second data fails. In this case, the third data may be used as a next token adjacent to the first data, and the third data may be data on which verification succeeds. Because the third data is generated by the second network, to ensure a matching degree in a next stage, autoregressive inference may be performed based on the third data through the first network, and corresponding verification may be performed through the second network. In a possible implementation, when it is determined that verification on the second data fails, eighth data is generated based on the third data through the first network; seventh data is generated based on the third data through the second network; and then the eighth data may be verified based on the seventh data.

In a possible implementation, the method is applied to the incremental inference process, and when a historical verification success rate in the incremental inference process meets a preset condition and it is determined that verification on the second data fails, the seventh data is generated based on the third data through the second network.

In a possible implementation, when the historical verification success rate in the incremental inference process does not meet the preset condition and it is determined that verification on the second data fails, the eighth data is generated based on the third data through the first network.

In a possible implementation, when it is determined that verification on the second data fails, and an amount of data on which verification performed by the second network succeeds in a current verification period is less than a preset value, data is generated in an autoregressive manner through the second network, until an amount of data on which verification performed by the second network succeeds in a current verification period for a first batch reaches the preset value.

In a possible implementation, when it is determined that verification on the second data fails, data is generated in an autoregressive manner through the first network, and the data generated by the first network in the autoregressive manner is verified through the second network, until the amount of data on which verification performed by the second network succeeds in the current verification period reaches the preset value.

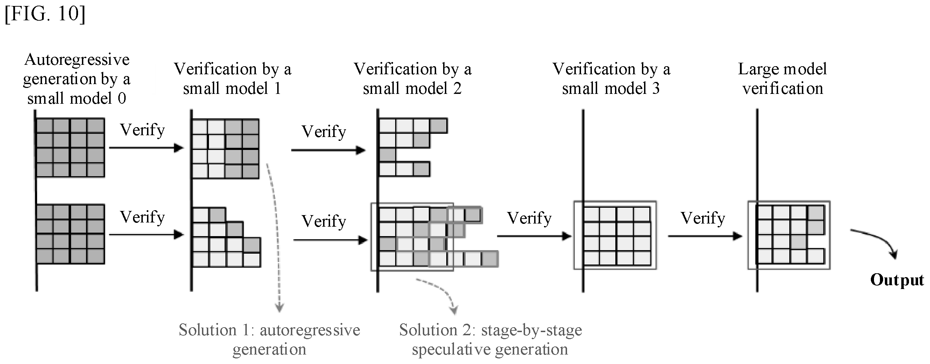

This embodiment of this application may also be applied to a dynamic batch inference process. Especially, in a multi-stage verification scenario, when a quantity of tokens on which verification succeeds in a stage cannot fill bs×n (bs is a quantity of batches, and n is an amount of data on which verification needs to succeed in a verification period of each batch, namely, the preset value in the foregoing embodiment), if the tokens are directly sent to a next stage for verification, a matching degree decreases stage by stage, and a computing parallelism degree and a final acceleration ratio are directly affected. Therefore, this embodiment of this application provides a multi-stage speculative batch inference solution based on a multi-level cache. A cache is set in each stage of speculative inference, and a cache of an i^{th} stage is a Li cache. When the cache is filled to exceed a threshold, next-stage inference is triggered. A triggering policy may be determined based on an actual matching degree of a model. Herein, it is assumed that the triggering policy is that the cache is filled to bs×n. When the cache is not full, there are two implementation solutions. Solution 1: Tokens that require autoregressive generation are regrouped to a new batch, unaligned batch autoregression is performed on a corresponding sub-model, and next-stage inference is triggered until the cache is full. Solution 2: Based on a quantity of matched tokens in a current stage, a stage 0 is rolled back to. Then, a small model 0 performs autoregressive prediction to obtain following n tokens, performs forward inference to the current stage, and then performs next-stage inference until the cache is filled to stage×n. In an actual multi-batch inference process, the two filling policies may be dynamically selected, and a policy with lower overheads may be selected based on a cache miss degree. For a diagram, refer to FIG. 10.

It is assumed that time required for inference at four layers of the model at a time is x, a plurality of tokens may be parallel, and time required for inference of one token, four tokens, and 4×4 tokens is all x.

It is assumed that time for the small model 0 to perform four times of autoregression is 4x. After a small model 1 completes verification, the cache is not full, and cannot trigger next-stage verification. In this case, if the solution 1 is selected, overheads are time 2x for one time of autoregression by the small model 1, and if the solution 2 is selected, overheads are time 5x for four times of autoregression by the small model 0 and one time of verification by the small model 1. Therefore, the solution 1 is selected.

A non-aligned token cache is obtained by a small model 2 through verification, and also cannot trigger next-stage verification. If the solution 1 is selected, overheads are three times of autoregression by the small model 2 and time is 3×3x=9x. If the solution 2 is selected, overhead are at least one time of autoregression by the small model 0 and one time of verification by each of the small model 1 and the small model 2, and total time is 6x. In this case, the solution 2 is selected greedily. In the solution 2, the triggering policy can be dynamically adjusted when the cache is filled. For example, the quantity of tokens in each batch is greater than a quantity of tokens missed in a batch corresponding to a next stage.

In this embodiment of this application, idle waiting of a computing unit during multi-batch computing of speculative inference can be reduced, and a token cache at each stage is added to ensure that a low matching degree at a previous stage causes no reduction to a matching length at each stage. An advantage of the solution 1 is that a quantity of generated tokens can be controlled, but the solution is not applied to speculative acceleration, and an excessively large quantity of autoregressive times slow down an overall speed. An advantage of the solution 2 is that autoregressive generation in a plurality of times can be accelerated, but rollback is caused when a matching degree is not good. During actual application, the two solutions may be used in combination based on a matching degree.

In a possible implementation, the method is applied to the incremental inference process, and the incremental inference process is a reply generation process for input data. Attention sub-information corresponding to a length of generated data in the reply generation process may be determined based on attention information (for example, may be an attention mask) in the full inference process corresponding to the incremental inference process and the length of the generated data, and the second data is generated based on the attention sub-information and the first data through the first network.

A batch input during speculative inference increases complexity of inference deployment. Complex engineering is required to manage the KV cache and resolve a problem of misaligned incremental inference steps (decoding steps). In multi-stage speculative inference, a bubble that reduces a throughput and a matching degree further exists during verified batch inference. Therefore, this specification proposes an efficient multi-batch speculative inference solution, which is not only applicable to the "nesting doll" multi-stage speculative small model inference proposed in this specification, but also can be expanded to common single-stage speculative small model inference application, to improve an acceleration ratio of multi-batch speculative inference. The foregoing embodiments describe the implementation of multi-stage verification.

During speculative inference, when stage=1, the small model generates bs×n tokens each time of autoregression and sends the tokens to the large model for verification. A quantity of tokens on which verification performed by the larger model succeeds in each batch is different, causing misalignment of decoding steps between the batches during next generation and verification performed by the large and small models. In addition, a length of n in each batch may be different. The original attention computing logic cannot support such computing. The solution provided in the present invention is as follows: A decoded_length parameter for a decoded sequence length of each batch is newly added during the incremental inference, and an attention_mask in each batch during each time of inference is dynamically updated based on the decoded_length and a verification length n, to ensure correctness of attention computing. A diagram of the attention_mask is shown below. If n in each batch has a different length, attention computing logic needs to be correspondingly modified for adaptation. In this solution, original multi-batch full inference logic may be reused, and there is no redundant computing and no additional memory overhead. Compared with that of single-batch inference, a throughput can be greatly improved.

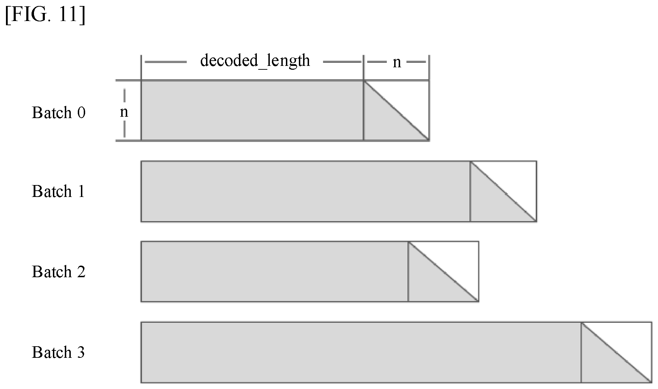

For example, FIG. 11 is a diagram of updating the attention_mask based on the decoded_length and the verification length n, where a blank area is an indication of masked data.

In a possible implementation, the method is performed on a first node, and the full inference process corresponding to the incremental inference process is performed on a second node. The first node may receive a processing result (for example, including an output token and a KV cache) that is sent by the second node and that is obtained by performing the full inference process, where the processing result is used to perform the incremental inference process.

In a possible implementation, the first data is data generated in an incremental inference process for a first batch, the method is applied to the first node, the first node further performs an incremental inference process for a second batch in parallel when performing the method. When the incremental inference process for the first batch is completed, and the first node has not completed the incremental inference process for the second batch, data in memory space corresponding to the incremental inference process for the first batch is cleared, and an incremental inference process for a third batch is started.

Separate deployment and a dynamic batch are effective means for improving a throughput of large model inference. The separate deployment means that full inference and incremental inference are separately deployed on different computing devices (for example, the first node and the second node in this embodiment of this application). Optionally, bs=1 inference may be used for the full inference to ensure a low latency, and a larger bs may be used for the incremental inference to ensure a high throughput. In this embodiment of this application, speculative inference may be organically deployed in combination with the separate deployment and the dynamic batch. Based on the multi-batch multi-stage inference solution provided in the present invention, a throughput of speculative inference can be further improved. A basic working manner of the solution is shown in the following figure. This solution is not only applicable to the "nesting doll" multi-stage speculative inference described in the foregoing embodiments, but also can be expanded to an application scenario of common speculative inference.

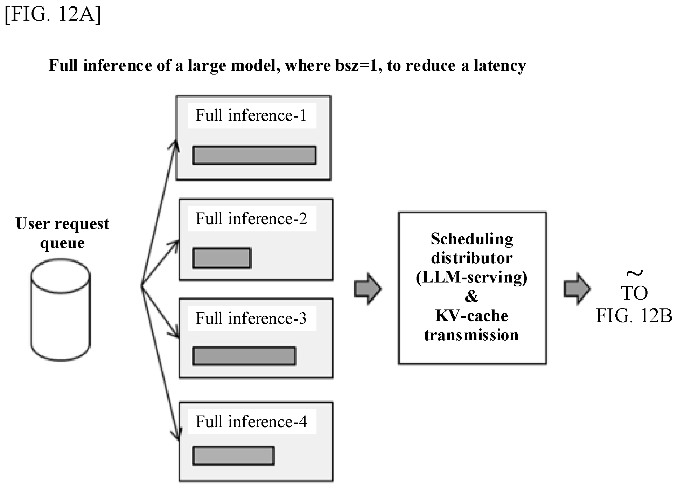

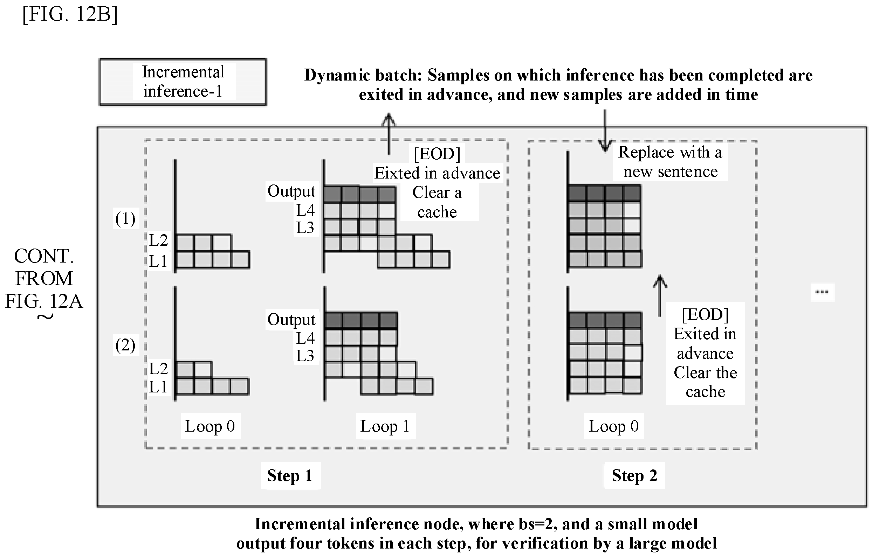

FIG. 12A and FIG. 12B are a diagram of the separate deployment. Full inference is deployed on four nodes with bs=1. If a single small model is used for speculative inference, a full inference node of the small model needs to be added. If a "nesting doll" small model solution is used, the full inference node of the large model may be reused, and no additional overhead is required. Incremental inference is deployed on one node with bs=2. After full inference is completed, an output token and a KV cache are sent to an incremental node. The incremental node sequentially performs multi-stage speculative inference. A same incremental node is deployed on large and small models, and inference is performed alternately. When stage=1 is combined with a dynamic batch, an overall throughput can be further improved. Because a data matching degree in each batch is different, and a quantity of decoding steps is also different, if a sentence on which decoding is completed is exited in advance, hardware utilization can be improved. In addition, it needs to be ensured that a valid token is replaced during each time of dynamic batch scheduling, a KV cache at a corresponding location is cleared, and corresponding decode_len is updated. If stage>1, a multi-level cache further needs to be set to ensure a matching degree of multi-stage speculative inference. During dynamic batch scheduling, all caches at corresponding batch locations need to be cleared.

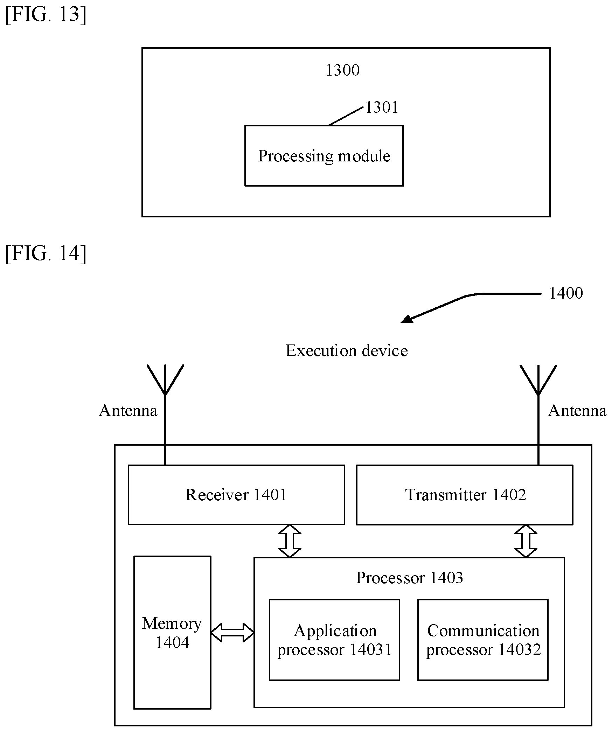

FIG. 13 is a diagram of a structure of a data processing apparatus according to an embodiment of this application. As shown in FIG. 13, a data processing apparatus 1300 provided in this embodiment of this application includes:
a processing module 1301, configured to: generate second data based on first data through a first network; generate third data based on the first data through a second network, where the first network includes a first network layer, the second network includes a second network layer, and the first network layer is a partial network of the second network layer; and verify the second data based on the third data.

For specific descriptions of the processing module, refer to the descriptions of the embodiment corresponding to FIG. 7 in the foregoing embodiments. Similarities are not described herein again.

In a possible implementation, before generating the second data based on the first data through the first network, the processing module 1301 is further configured to:
generate the first data based on fourth data through the first network.

In a possible implementation, the processing module 1301 is further configured to:
generate fifth data based on the fourth data through the second network, where the action of generating the fifth data and the action of generating the third data are executed in parallel; and
verify the first data based on the fifth data.

In a possible implementation, the apparatus is used in an incremental inference process, both the first network layer and the second network layer belong to a target neural network, and the target neural network is a model used in a full inference process corresponding to the incremental inference process.

In a possible implementation, the second network layer includes the first network layer and a third network layer connected to the first network layer, and the third network layer is closer to an output layer of the target neural network than the first network layer.

In a possible implementation, the first network includes the first network layer and a first decoding layer, and the second network includes a second network layer and a second decoding layer.

The processing module 1301 is specifically configured to:
obtain a first processing result based on the first data through the first network layer, and obtain the second data based on the first processing result through the first decoding layer; and
obtain a second processing result based on the first processing result through the third network layer, and generate the third data based on the second processing result through the second decoding layer.

In a possible implementation, the processing module 1301 is specifically configured to:
when the third data is consistent with the second data, determine that verification on the second data succeeds; and
when the third data is inconsistent with the second data, determine that verification on the second data fails.

In a possible implementation, the processing module 1301 is further configured to:
generate sixth data based on the first data through a third network when it is determined that verification on the second data succeeds, where the third network includes a fourth network layer, and the second network layer is a partial network of the fourth network layer; and
verify the second data based on the sixth data.

In a possible implementation, the processing module 1301 is further configured to:
generate the sixth data based on the first data through the third network when it is determined that verification on the second data fails, where the third network includes the fourth network layer, and the second network layer is a partial network of the fourth network layer; and
verify the third data based on the sixth data.

In a possible implementation, the processing module 1301 is further configured to:
generate seventh data based on the third data through the second network when it is determined that verification on the second data fails.

In a possible implementation, the apparatus is used in the incremental inference process, and the processing module 1301 is specifically configured to:
when a historical verification success rate in the incremental inference process meets a preset condition and it is determined that verification on the second data fails, generate the seventh data based on the third data through the second network.

In a possible implementation, the processing module 1301 is further configured to:
generate eighth data based on the third data through the first network when it is determined that verification on the second data fails;
generate the seventh data based on the third data through the second network; and
verify the eighth data based on the seventh data.

In a possible implementation, the processing module 1301 is specifically configured to:
when the historical verification success rate in the incremental inference process does not meet the preset condition and it is determined that verification on the second data fails, generate the eighth data based on the third data through the first network.

In a possible implementation, the apparatus is used in the incremental inference process, the incremental inference process is a reply generation process for input data, and the processing module 1301 is specifically configured to:
determine, based on attention information in the full inference process corresponding to the incremental inference process and a length of generated data in the reply generation process, attention sub-information corresponding to the length of the generated data; and
generate the second data based on the attention sub-information and the first data through the first network.

In a possible implementation, the apparatus is used in a first node for execution, and the full inference process corresponding to the incremental inference process is performed on a second node.

Before generating the second data based on the first data through the first network, the processing module 1301 is further configured to:
receive a processing result that is sent by the second node and that is obtained by performing the full inference process, where the processing result is used to perform the incremental inference process.

In a possible implementation, the first data is data generated in an incremental inference process for a first batch, the apparatus is used in the first node, the first node further performs an incremental inference process for a second batch in parallel when the apparatus is used for execution, and the processing module 1301 is further configured to:
when the incremental inference process for the first batch is completed, and the first node has not completed the incremental inference process for the second batch, clear data in memory space corresponding to the incremental inference process for the first batch, and start to perform an incremental inference process for a third batch.

In a possible implementation, the processing module 1301 is further configured to: when it is determined that verification on the second data fails, and an amount of data on which verification performed by the second network succeeds in a current verification period is less than a preset value, generate data in an autoregressive manner through the second network, until an amount of data on which verification performed by the second network succeeds in a current verification period for the first batch reaches the preset value; or
when it is determined that verification on the second data fails, generate data in an autoregressive manner through the first network, and verify, through the second network, the data generated by the first network in the autoregressive manner, until the amount of data on which verification performed by the second network succeeds in the current verification period reaches the preset value.

The following describes an execution device provided in embodiments of this application. FIG. 14 is a diagram of a structure of an execution device according to an embodiment of this application. An execution device 1400 may be specifically a virtual reality VR device, a mobile phone, a tablet, a notebook computer, an intelligent wearable device, a monitoring data processing device, a server, or the like. This is not limited herein. Specifically, the execution device 1400 includes a receiver 1401, a transmitter 1402, a processor 1403 (there may be one or more processors 1403 in the execution device 1400, and one processor is used as an example in FIG. 14), and a memory 1404. The processor 1403 may include an application processor 14031 and a communication processor 14032. In some embodiments of this application, the receiver 1401, the transmitter 1402, the processor 1403, and the memory 1404 may be connected through a bus or in another manner.

The memory 1404 may include a read-only memory and a random access memory, and provide instructions and data for the processor 1403. A part of the memory 1404 may further include a non-volatile random access memory (non-volatile random access memory, NVRAM). The memory 1404 stores operation instructions of the processor, an executable module or a data structure, a subnet thereof, or an expanded set thereof. The operation instructions may include various operation instructions used to implement various operations.

The processor 1403 controls an operation of the execution device. During specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1403 or may be implemented by the processor 1403. The processor 1403 may be an integrated circuit chip, and has a signal processing capability. In an implementation process, steps of the foregoing methods may be completed by an integrated logic circuit of hardware in the processor 1403 or instructions in a form of software. The processor 1403 may be a general-purpose processor, a digital signal processor (digital signal processor, DSP), a microprocessor, or a microcontroller; and may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 1403 may implement or perform the methods, steps, and logical block diagrams disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1404, and the processor 1403 reads information in the memory 1404 and performs the steps related to the model inference process in the foregoing methods in combination with hardware of the processor.

The receiver 1401 may be configured to: receive input digit or character information, and generate a signal input related to a related setting and function control of the execution device. The transmitter 1402 may be configured to output digit or character information through a first interface. The transmitter 1402 may be further configured to send instructions to a disk group through the first interface, to modify data in the disk group. The transmitter 1402 may further include a display device, for example, a display.

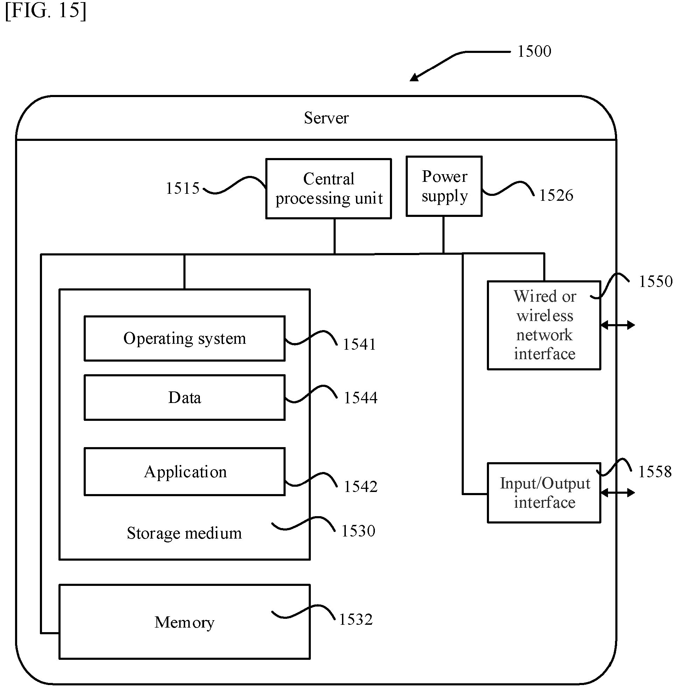

An embodiment of this application further provides a server device. FIG. 15 is a diagram of a structure of a server according to an embodiment of this application. Specifically, the server 1500 is implemented by one or more servers. The server 1500 may vary greatly due to different configurations or performance, and may include one or more central processing units (central processing units, CPUs) 1515 (for example, one or more processors), a memory 1532, and one or more storage media 1530 (for example, one or more mass storage devices) for storing an application 1542 or data 1544. The memory 1532 and the storage medium 1530 may be transient storage or persistent storage. A program stored in the storage medium 1530 may include one or more modules (not shown in the figure), and each module may include a series of instruction operations for the server. Further, the central processing unit 1515 may be configured to communicate with the storage medium 1530, and perform, on the server 1500, a series of instruction operations in the storage medium 1530.

The server 1500 may further include one or more power supplies 1526, one or more wired or wireless network interfaces 1550, one or more input/output interfaces 1558, or one or more operating systems 1541, for example, Windows ServerTM, Mac OS XTM, UnixTM, LinuxTM, or FreeBSDTM.

In this embodiment of this application, the central processing unit 1515 is configured to perform the data processing method in the foregoing embodiments.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used for signal processing, and when the program is run on a computer, the computer is enabled to perform steps performed by the foregoing execution device, or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in the foregoing embodiments, or a chip in a training device performs the data processing method described in the foregoing embodiments. Optionally, the storage unit is a storage unit in the chip, for example, a register or a cache. Alternatively, the storage unit may be a storage unit that is in a radio access device end and that is located outside the chip, for example, a read-only memory (read-only memory, ROM) or another type of static storage device that can store static information and instructions, for example, a random access memory (random access memory, RAM).

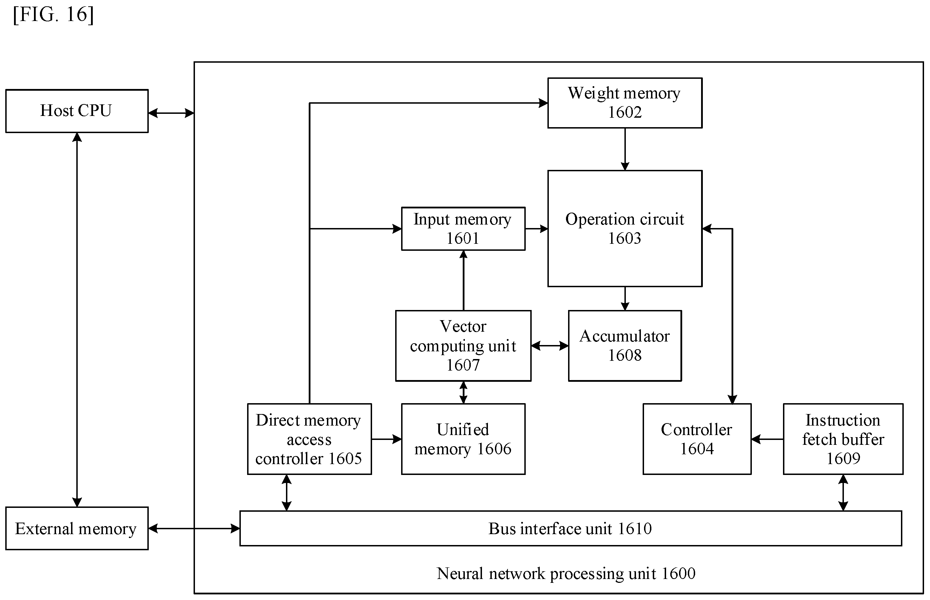

Specifically, refer to FIG. 16. FIG. 16 is a diagram of a structure of a chip according to an embodiment of this application. The chip may be represented as a neural network processing unit NPU 1600. The NPU 1600 is mounted to a host CPU (Host CPU) as a coprocessor, and the host CPU allocates a task. A core part of the NPU is an operation circuit 1603. The operation circuit 1603 is controlled by a controller 1604 to extract matrix data in a memory and perform a multiplication operation.

In some implementations, the operation circuit 1603 includes a plurality of process engines (Process Engines, PEs) inside. In some implementations, the operation circuit 1603 is a two-dimensional systolic array. The operation circuit 1603 may be alternatively a one-dimensional systolic array or another electronic circuit that can perform mathematical operations such as multiplication and addition. In some implementations, the operation circuit 1603 is a general-purpose matrix processor.

For example, it is assumed that there is an input matrix A, a weight matrix B, and an output matrix C. The operation circuit fetches data corresponding to the matrix B from a weight memory 1602 and buffers the data on each PE in the operation circuit. The operation circuit fetches data of the matrix A from an input memory 1601, to perform a matrix operation on the matrix B, and stores an obtained partial result or an obtained final result of the matrix in an accumulator (accumulator) 1608.

A unified memory 1606 is configured to store input data and output data. Weight data is directly transferred to the weight memory 1602 through a direct memory access controller (Direct Memory Access Controller, DMAC) 1605. The input data is also transferred to the unified memory 1606 through the DMAC.

A BIU is a bus interface unit, namely, a bus interface unit 1610, and is configured to perform interaction between an AXI bus, the DMAC, and an instruction fetch buffer (Instruction Fetch Buffer, IFB) 1609.

The bus interface unit 1610 (Bus Interface Unit, BIU for short) is used by the instruction fetch buffer 1609 to obtain instructions from an external memory, and further used by the direct memory access controller 1605 to obtain original data of the input matrix A or the weight matrix B from the external memory.

The DMAC is mainly configured to: transfer input data in an external memory DDR to the unified memory 1606, transfer the weight data to the weight memory 1602, or transfer the input data to the input memory 1601.

A vector computing unit 1607 includes a plurality of operation processing units, and if needed, performs further processing, for example, vector multiplication, vector addition, an exponential operation, a logarithmic operation, or magnitude comparison, on an output of the operation circuit 1603. The vector computing unit is mainly used for network computing, for example, batch normalization (batch normalization), pixel-level summation, or upsampling on a feature plane, at a non-convolutional/fully connected layer of a neural network.

In some implementations, the vector computing unit 1607 can store processed output vectors into the unified memory 1606. For example, the vector computing unit 1607 may apply a linear function or a nonlinear function to the output of the operation circuit 1603, for example, perform linear interpolation on a feature plane extracted at a convolutional layer. For another example, vectors whose values are accumulated are used to generate an activation value. In some implementations, the vector computing unit 1607 generates a normalized value, a pixel-level sum, or both a normalized value and a pixel-level sum. In some implementations, the processed output vector can be used as an activation input to the operation circuit 1603, for example, used at a subsequent layer of the neural network.

The instruction fetch buffer (instruction fetch buffer) 1609 connected to the controller 1604 is configured to store instructions used by the controller 1604.

The unified memory 1606, the input memory 1601, the weight memory 1602, and the instruction fetch buffer 1609 are all on-chip memories. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiments are merely examples. The units described as separate parts may or may not be physically separate, and parts displayed as units may or may not be physical units, and may be located in one location, or may be distributed on a plurality of network units. Some or all the modules may be selected based on an actual requirement to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or certainly may be implemented by dedicated hardware, including an application-specific integrated circuit, a dedicated CPU, a dedicated memory, a dedicated component, and the like. Generally, any function that can be completed by a computer program can be easily implemented by corresponding hardware. Moreover, a specific hardware structure used to achieve a same function may be of various forms, for example, in a form of an analog circuit, a digital circuit, a dedicated circuit, or the like. However, in this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods described in embodiments of this application.

All or some of the foregoing embodiments may be implemented by using software, hardware, firmware, or any combination thereof. When software is used for implementation, all or some of the methods may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Drive, SSD)), or the like.

## Claims

1. A data processing method, wherein the method comprises:
generating second data based on first data through a first network;
generating third data based on the first data through a second network, wherein the first network comprises a first network layer, the second network comprises a second network layer, and the first network layer is a partial network of the second network layer; and
verifying the second data based on the third data.

2. The method according to claim 1, wherein before generating the second data based on the first data through the first network, the method further comprises:
generating the first data based on fourth data through the first network.

3. The method according to claim 2, wherein the method further comprises:
generating fifth data based on the fourth data through the second network, wherein the action of generating the fifth data and the action of generating the third data are executed in parallel; and verifying the first data based on the fifth data.

4. The method according to any one of claims 1 to 3, wherein the method is applied to an incremental inference process, both the first network layer and the second network layer belong to a target neural network, and the target neural network is a model used in a full inference process corresponding to the incremental inference process.

5. The method according to claim 4, wherein the second network layer comprises the first network layer and a third network layer connected to the first network layer, and the third network layer is closer to an output layer of the target neural network than the first network layer.

6. The method according to claim 5, wherein the first network comprises the first network layer and a first decoding layer, and the second network comprises the second network layer and a second decoding layer;
generating the second data based on the first data through the first network comprises:
obtaining a first processing result based on the first data through the first network layer, and obtaining the second data based on the first processing result through the first decoding layer; and
generating the third data based on the first data through the second network comprises:
obtaining a second processing result based on the first processing result through the third network layer, and generating the third data based on the second processing result through the second decoding layer.

7. The method according to any one of claims 1 to 6, wherein verifying the second data based on the third data comprises:
when the third data is consistent with the second data, determining that verification on the second data succeeds; and
when the third data is inconsistent with the second data, determining that verification on the second data fails.

8. The method according to any one of claims 1 to 7, wherein the method further comprises:
generating sixth data based on the first data through a third network when it is determined that verification on the second data succeeds, wherein the third network comprises a fourth network layer, and the second network layer is a partial network of the fourth network layer; and
verifying the second data based on the sixth data.

9. The method according to any one of claims 1 to 8, wherein the method further comprises:
generating the sixth data based on the first data through the third network when it is determined that verification on the second data fails, wherein the third network comprises the fourth network layer, and the second network layer is a partial network of the fourth network layer; and
verifying the third data based on the sixth data.

10. The method according to any one of claims 1 to 9, wherein the method further comprises:
generating seventh data e based on the third data through the second network when it is determined that verification on the second data fails.

11. The method according to claim 10, wherein the method is applied to the incremental inference process, and generating the seventh data based on the third data through the second network when it is determined, based on the fourth data, that verification on the second data fails comprises:
when a historical verification success rate in the incremental inference process meets a preset condition and it is determined that verification on the second data fails, generating the seventh data based on the third data through the second network.

12. The method according to any one of claims 1 to 11, wherein the method further comprises:
generating eighth data based on the third data through the first network when it is determined that verification on the second data fails;
generating the seventh data based on the third data through the second network; and
verifying the eighth data based on the seventh data.

13. The method according to claim 12, wherein generating the eighth data based on the third data through the first network when it is determined that verification on the second data fails comprises:
when the historical verification success rate in the incremental inference process does not meet the preset condition and it is determined that verification on the second data fails, generating the eighth data based on the third data through the first network.

14. The method according to any one of claims 1 to 13, wherein the method is applied to the incremental inference process, the incremental inference process is a reply generation process for input data, and generating the second data based on the first data through the first network comprises:
determining, based on attention information in the full inference process corresponding to the incremental inference process and a length of generated data in the reply generation process, attention sub-information corresponding to the length of the generated data; and
generating the second data based on the attention sub-information and the first data through the first network.

15. The method according to any one of claims 1 to 14, wherein the method is performed on a first node, and the full inference process corresponding to the incremental inference process is performed on a second node; and
before generating the second data based on the first data through the first network, the method further comprises:
receiving a processing result that is sent by the second node and that is obtained by performing the full inference process, wherein the processing result is used to perform the incremental inference process.

16. The method according to any one of claims 1 to 15, wherein the first data is data generated in an incremental inference process for a first batch, the method is applied to the first node, the first node further performs an incremental inference process for a second batch in parallel when performing the method, and the method further comprises:
when the incremental inference process for the first batch is completed, and the first node has not completed the incremental inference process for the second batch, clearing data in memory space corresponding to the incremental inference process for the first batch, and starting to perform an incremental inference process for a third batch.

17. The method according to any one of claims 1 to 16, wherein the method further comprises:
when it is determined that verification on the second data fails, and an amount of data on which verification performed by the second network succeeds in a current verification period is less than a preset value, generating data in an autoregressive manner through the second network, until an amount of data on which verification performed by the second network succeeds in a current verification period for the first batch reaches the preset value; or
when it is determined that verification on the second data fails, generating data in an autoregressive manner through the first network, and verifying, through the second network, the data generated by the first network in the autoregressive manner, until the amount of data on which verification performed by the second network succeeds in the current verification period reaches the preset value.

18. The method according to any one of claims 1 to 17, wherein the first data is a token, the second data is an adjacent token following the first data, and the third data is an adjacent token following the second data.

19. The method according to any one of claims 1 to 18, wherein the first data, the second data, and the third data are text data units, image data units, or audio data units.

20. The method according to any one of claims 1 to 19, wherein the first data is a data unit obtained in the full inference process or a data unit generated by performing, through the first network, autoregressive inference on the data unit obtained in the full inference process.

21. A data processing method, wherein the method comprises:
obtaining input data;
performing full inference based on the input data through a target neural network, to obtain a full inference result; and
obtaining, based on the full inference result through incremental inference, a reply result corresponding to the input data, wherein the incremental inference is implemented through a first network and a second network, the first network is used for autoregressive inference, the second network is used for verification inference, the first network comprises a first network layer, the second network comprises a second network layer, and the first network layer is a partial network of the second network layer.

22. A data processing apparatus, wherein the apparatus comprises:
a processing module, configured to: generate second data based on first data through a first network; generate third data based on the first data through a second network, wherein the first network comprises a first network layer, the second network comprises a second network layer, and the first network layer is a partial network of the second network layer; and verify the second data based on the third data.

23. The apparatus according to claim 22, wherein before generating the second data based on the first data through the first network, the processing module is further configured to:
generate the first data based on fourth data through the first network.

24. The apparatus according to claim 23, wherein the processing module is further configured to:
generate fifth data based on the fourth data through the second network, wherein the action of generating the fifth data and the action of generating the third data are executed in parallel; and verify the first data based on the fifth data.

25. The apparatus according to any one of claims 22 to 24, wherein the method is applied to an incremental inference process, both the first network layer and the second network layer belong to a target neural network, and the target neural network is a model used in a full inference process corresponding to the incremental inference process.

26. The apparatus according to any one of claims 22 to 25, wherein both the first network layer and the second network layer belong to the target neural network, the second network layer comprises the first network layer and a third network layer connected to the first network layer, and the third network layer is closer to an output layer of the target neural network than the first network layer.

27. The apparatus according to any one of claims 22 to 26, wherein the processing module is further configured to:
generate sixth data based on the first data through a third network when it is determined that verification on the second data succeeds, wherein the third network comprises a fourth network layer, and the second network layer is a partial network of the fourth network layer; and
verify the second data based on the sixth data.

28. The apparatus according to any one of claims 22 to 27, wherein the processing module is further configured to:
generate the sixth data based on the first data through the third network when it is determined that verification on the second data fails, wherein the third network comprises the fourth network layer, and the second network layer is a partial network of the fourth network layer; and
verify the third data based on the sixth data.

29. The apparatus according to any one of claims 22 to 28, wherein the processing module is further configured to:
generate seventh data based on the third data through the second network when it is determined that verification on the second data fails.

30. The apparatus according to any one of claims 22 to 29, wherein the processing module is further configured to:
generate eighth data based on the third data through the first network when it is determined that verification on the second data fails;
generate the seventh data based on the third data through the second network; and
verify the eighth data based on the seventh data.

31. The apparatus according to claim 30, wherein the processing module is specifically configured to: when a historical verification success rate in the incremental inference process does not meet a preset condition and it is determined that verification on the second data fails, generate the eighth data based on the third data through the first network.

32. The apparatus according to any one of claims 22 to 31, wherein the apparatus is used in the incremental inference process, the incremental inference process is a reply generation process for input data, and the processing module is specifically configured to:
determine, based on attention information in the full inference process corresponding to the incremental inference process and a length of generated data in the reply generation process, attention sub-information corresponding to the length of the generated data; and
generate the second data based on the attention sub-information and the first data through the first network.

33. The apparatus according to any one of claims 22 to 32, wherein the apparatus is used in a first node for execution, and the full inference process corresponding to the incremental inference process is performed on a second node; and
before generating the second data based on the first data through the first network, the processing module is further configured to:
receive a processing result that is sent by the second node and that is obtained by performing the full inference process, wherein the processing result is used to perform the incremental inference process.

34. The apparatus according to any one of claims 22 to 33, wherein the first data is data generated in an incremental inference process for a first batch, the apparatus is used in the first node, the first node further performs an incremental inference process for a second batch in parallel when the apparatus is used for execution, and the processing module is further configured to:
when the incremental inference process for the first batch is completed, and the first node has not completed the incremental inference process for the second batch, clear data in memory space corresponding to the incremental inference process for the first batch, and start to perform an incremental inference process for a third batch.

35. The apparatus according to any one of claims 22 to 34, wherein the processing module is further configured to:
when it is determined that verification on the second data fails, and an amount of data on which verification performed by the second network succeeds in a current verification period is less than a preset value, generate data in an autoregressive manner through the second network, until an amount of data on which verification performed by the second network succeeds in a current verification period for the first batch reaches the preset value; or
when it is determined that verification on the second data fails, generate data in an autoregressive manner through the first network, and verify, through the second network, the data generated by the first network in the autoregressive manner, until the amount of data on which verification performed by the second network succeeds in the current verification period reaches the preset value.

36. A computer storage medium, wherein the computer storage medium stores one or more instructions, and when the instructions are executed by one or more computers, the one or more computers are enabled to perform an operation in the method according to any one of claims 1 to 21.

37. A computer program product, comprising computer-readable instructions, wherein when the computer-readable instructions are run on a computer device, the computer device is enabled to perform the method according to any one of claims 1 to 21.

38. A system, comprising at least one processor and at least one memory, wherein the processor and the memory are connected and communicate with each other through a communication bus;
the at least one memory is configured to store code; and
the at least one processor is configured to execute the code to perform the method according to any one of claims 1 to 21.

39. A chip, comprising at least one processing unit and an interface circuit, wherein the interface circuit is configured to provide program instructions or data for the at least one processing unit, and the at least one processing unit is configured to execute the program instructions to implement the method according to any one of claims 1 to 21.
